# EUROPEAN PATENT APPLICATION

(11) **EP 2 489 690 A1**
(43) Date of publication of application: **22.08.2012**
(21) Application number: 10823501.1
(22) Date of filing: 15.10.2010
(51) Int. Cl.: C08G 61/12, C08G 61/10, H01B 1/06, H01M 4/86, H01M 8/02, H01M 8/10

(54) **POLYARYLENE COPOLYMER AND USES THEREOF**

(30) Priority: 16.10.2009 JP 2009239086
(71) Applicant: Sumitomo Chemical Company Limited, Tokyo 104-8260 (JP)
(72) Inventor: NAKAMURA, Taisuke, Osaka-shi Osaka 554-0024 (JP); MACHIDA, Yoichiro, Tokyo 108-0072 (JP)
(74) Representative: Brunetti, Fabrizio
(86) International application number: PCT/JP2010/068652
(87) International publication number: WO 2011/046234

(57) **Abstract**

The present invention provides a polyarylene-based copolymer including a plurality of segments having an ion exchange group and a plurality of segments having substantially no ion exchange group, wherein at least one of the segments having an ion exchange group includes a polyarylene structure, the polystyrene-equivalent weight-average molecular weight of the segments having an ion exchange group is from 10,000 to 250,000, and the ion exchange capacity of the polyarylene-based copolymer is 3.0 meq/g or more.

## Description

### TECHNICAL FIELD

The present invention relates to a polyarylene-based copolymer and uses thereof.

### BACKGROUND ART

Polymer electrolyte membranes are used as a separation membrane of electrochemical devices such as primary cells, secondary cells, and fuel cells. For example, fluorine-based polymer electrolyte membranes including Nafion (registered trademark of E.I. du Pont de Nemours and Company) have conventionally been mainly used because they are excellent in electricity generating characteristics when used as a separation membrane for fuel cells. However, various problems with the fluorine-based polymer electrolyte membranes have been pointed-out, such as high prices, low heat resistance, high disposal cost, and poor practical utility due to low membrane strength without any reinforcement.

Under these circumstances, development of hydrocarbon-based polymer electrolyte membranes that are inexpensive and have superior characteristics have recently been actively conducted, which can replace the fluorine-based polymer electrolyte membranes.

As the hydrocarbon-based polymer electrolyte membranes, for example, a polymer electrolyte membrane formed by using a polyarylene-based copolymer with an ion exchange capacity of 2.3 meq/g, including a block having an ion exchange group including a polyarylene structure and a block having no ion exchange group, has been known (see, for example, JP-A-2008-247857).

However, the polymer electrolyte membranes have been not fully satisfactory in terms of durability.

### DISCLOSURE OF THE INVENTION

It is an object of the present invention to provide a polyarylene-based copolymer capable of providing a membrane which exhibits excellent durability when used as a polymer electrolyte membrane. It is another object to provide a polymer electrolyte including the polyarylene-based copolymer, a member for a fuel cell (particularly, a polymer electrolyte membrane) including the polymer electrolyte, and a polymer electrolyte-type fuel cell including the member.

The present inventors have repeated extensive studies on the polyarylene-based copolymer, taking into consideration the above-described situation. As a result, they have found that by specifying the copolymer including a plurality of segments having an ion exchange group and a plurality of segments having substantially no ion exchange group in terms of at least one of the segments having an ion exchange group being allowed to include a specific sequence, the weight-average molecular weight of the segments having an ion exchange group, and the partial structure of at least one in segments having no ion exchange group, the above-described problems can be solved, thereby accomplishing the present invention. That is, the present invention is intended to provide item [1].
[1] A polyarylene-based copolymer including a plurality of segments having an ion exchange group and a plurality of segments having substantially no ion exchange group, wherein
   at least one of the segments having an ion exchange group includes a polyarylene structure, the polystyrene-equivalent weight-average molecular weight of the segments having an ion exchange group is from 10,000 to 250,000, and
   the ion exchange capacity of the polyarylene-based copolymer is 3.0 meq/g or more.
   Furthermore, the present invention provides the following [2] to [15] as suitable embodiments regarding the polyarylene-based copolymer.
[2] The polyarylene-based copolymer according to [1], wherein at least one of the segments having substantially no ion exchange group has an electron withdrawing group, and has at least one selected from the group consisting of an ether bond and a thioether bond in the main chain.
[3] The polyarylene-based copolymer according to [2], wherein the polystyrene-equivalent weight-average molecular weight as measured after the cleavage of the ether bond and the thioether bond included in the main chain of the segments having substantially no ion exchange group is from 10,000 to 250,000.
[4] The polyarylene-based copolymer according to any one of [1] to [3], wherein 2200 parts by weight of dimethyl sulfoxide, 2 to 13 parts by weight of a methanol solution including 25% by weight of tetramethylammonium hydroxide, and I part by weight of the polyarylene-based copolymer are mixed to obtain a solution in which the mixed polyarylene-based copolymer is fully or substantially fully dissolved, and the polystyrene-equivalent weight-average molecular weight as measured after heating the solution at 100°C for 2 hours is from 10,000 to 250,000.
[5] The polyarylene-based copolymer according to any one of [1] to [4], wherein the polystyrene-equivalent weight-average molecular weight of the segments having an ion exchange group is from 10,000 to 160,000.
[6] The polyarylene-based copolymer according to any one of [2], [4], and [5], wherein the polystyrene-equivalent weight-average molecular weight as measured after the cleavage of the ether bond and the thioether bond included in the main chain of the segments having substantially no ion exchange group is from 10,000 to 160,000.
[7] The polyarylene-based copolymer according to any one of [1] to [3], [5], and [6], wherein 2200 parts by weight of dimethyl sulfoxide, 2 to 13 parts by weight of a methanol solution including 25% by weight of tetramethylammonium hydroxide, and 1 part by weight of the polyarylene-based copolymer are mixed to obtain a solution in which the mixed polyarylene-based copolymer is fully or substantially fully dissolved, and the polystyrene-equivalent weight-average molecular weight as measured after heating the solution at 100°C for 2 hours is from 10,000 to 160,000.
[8] The polyarylene-based copolymer according to any one of [1] to [7], wherein at least one of the segments having substantially no ion exchange group includes a structural unit represented by the following formula (1): 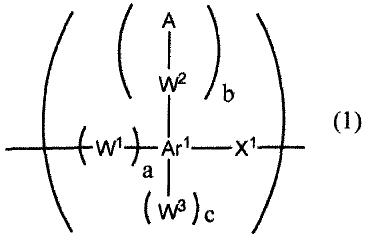 (wherein Ar¹ represents an arylene group which may have a substituent. The arylene group may have a group other than at least one group selected from the group represented by -(W²-A) and a group represented by W³ as a substituent. W¹ and W² each independently represent a divalent electron withdrawing group. W³ represents a monovalent electron withdrawing group. A represents a hydrogen atom, a fluorine atom, an alkyl group having 1 to 20 carbon atoms, which may have a substituent, an alkoxy group having 1 to 20 carbon atoms, which may have a substituent, an aryl group having 6 to 20 carbon atoms, which may have a substituent, or an aryloxy group having 6 to 20 carbon atoms, which may have a substituent. X¹ represents a group represented by -O- or a group represented by -S-. Here, a represents an integer of 0 or 1, and b and c each independently represents an integer of 0 or more, and a+b+c equals 1 or more. Further, when b is 2 or more, W²'s present may be the same as or different from each other, and A's present may be the same as or different from each other. When c is 2 or more, W³'s present may be the same as or different from each other).
[9] The polyarylene-based copolymer according to [8], wherein the structural unit represented by the formula (1) is a structural unit represented by the following formula (2): 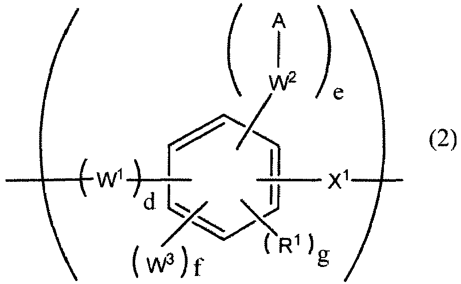 (wherein W¹, W², W³, X¹, and A have the same definitions as in the formula (1). R¹ represents an alkyl group having 1 to 20 carbon atoms, which may have a substituent, an alkoxy group having I to 20 carbon atoms, which may have a substituent, an aryl group having 6 to 20 carbon atoms, which may have a substituent, or an aryloxy group having 6 to 20 carbon atoms, which may have a substituent. Here, d represents an integer of 0 or 1, and e, f, and g each independently represents 0 to 4, d+e+f equals an integer of I to 5, and e+f+g an integer of 0 to 4. Further, when e is 2 or more, W²'s present may be the same as or different from each other, and A's present may be the same as or different from each other. When f is 2 or more, W³'s present may be the same as or different from each other. When g is 2 or more, R¹'s present may be the same as or different from each other).
[10] The polyarylene-based copolymer according to any one of [1] to [9], wherein the ion exchange capacity is from 3.5 meq/g to 5.5 meq/g.
[11] The polyarylene-based copolymer according to any one of [1] to [10], wherein at least one of the segments having substantially no ion exchange group includes a structural unit represented by the following formula (3):

   —(̵Ar²-X²)̵— (3)

   (wherein Ar² represents a divalent aromatic group, and the divalent aromatic group may have at least one group selected from a group consisting of a fluorine atom, an alkyl group having 1 to 20 carbon atoms, which may have a substituent, an alkoxy group having 1 to 20 carbon atoms, which may have a substituent, an aryl group having 6 to 20 carbon atoms, which may have a substituent, an aryloxy group having 6 to 20 carbon atoms, which may have a substituent, an acyl group having 2 to 20 carbon atoms, which may have a substituent, an arylsulfonyl group having 6 to 20 carbon atoms, which may have a substituent, an alkylsulfonyl group having 1 to 20 carbon atoms, which may have a substituent, and a cyano group as a substituent. X² represents a group represented by -O- or a group represented by -S-).
[12] The polyarylene-based copolymer according to any one of [1] to [11], wherein at least one of the segments having an ion exchange group includes a structure represented by the following formula (4): 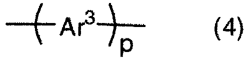 (wherein Ar³ represents a divalent aromatic group having an ion exchange group, and the divalent aromatic group may have at least one group selected from a group consisting of a fluorine atom, an alkyl group having 1 to 20 carbon atoms, which may have a substituent, an aryl group having 6 to 20 carbon atoms, which may have a substituent, an acyl group having 2 to 20 carbon atoms, which may have a substituent, an arylsulfonyl group having 6 to 20 carbon atoms, which may have a substituent, an alkylsulfonyl group having 1 to 20 carbon atoms, which may have a substituent, and a cyano group as a substituent. Here, p represents an integer of 1 or more. When p is 2 or more, Ar³'s present may be the same as or different from each other).
[13] The polyarylene-based copolymer according to [12], wherein the aromatic ring consisting the main chain of the aromatic group represented by Ar³ has at least one ion exchange group which is directly bonded to the aromatic ring.
[14] The polyarylene-based copolymer according to any one of [1] to [13], wherein the ion exchange group included in the segments having an ion exchange group is at least one acid group selected from a group consisting of a sulfo group, a phosphonic group, a carboxylic group, and a sulfonimide group.
[15] The polyarylene-based copolymer according to any one of [12] to [14], wherein the said structure represented by the formula (4) is a structure represented by the following formula (5): 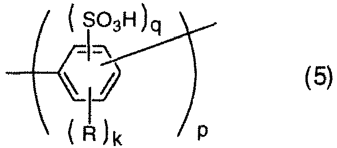 (wherein R represents a fluorine atom, an alkyl group having 1 to 20 carbon atoms, which may have a substituent, an aryl group having 6 to 20 carbon atoms, which may have a substituent, an acyl group having 2 to 20 carbon atoms, which may have a substituent, an arylsulfonyl group having 6 to 20 carbon atoms, which may have a substituent, an alkylsulfonyl group having 1 to 20 carbon atoms, which may have a substituent, or a cyano group. Here, k represents an integer of 0 to 3, q represents an integer of I or 2, and k+q equals an integer of I to 4. Further, when k is 2 or 3, R's present may be the same as or different from each other, and p has the same definition as described above).

The polyarylene-based copolymer according to any one of [1] to [15] is excellent, particularly as a polymer electrolyte used in a member for a fuel cell. Therefore, the present invention provides the following [16] to [21].
[16] A polymer electrolyte comprising the polyarylene-based copolymer according to any one of [1] to [15].
[17] A polymer electrolyte membrane comprising the polymer electrolyte according to [16].
[18] A polymer electrolyte composite membrane comprising the polymer electrolyte according to [16] and a porous base material.
[19] A catalyst composition comprising the polymer electrolyte according to [16] and a catalyst component.
[20] A membrane electrode assembly comprising at least one selected from the polymer electrolyte membrane according to [17], the polymer electrolyte composite membrane according to [18], and the catalyst composition according to [19].
[21] A polymer electrolyte-type fuel cell comprising the membrane electrode assembly according to [20].

### MODE FOR CARRYING OUT THE INVENTION

The polyarylene-based copolymer of the present invention is a polyarylene-based copolymer comprising a plurality of segments having an ion exchange group and a plurality of segments having substantially no ion exchange group, wherein at least one of the segments having an ion exchange group includes a polyarylene structure, the polystyrene-equivalent weight-average molecular weight of the segments having an ion exchange group is from 10,000 to 250,000, and the ion exchange capacity of the polyarylene-based copolymer is 3.0 meq/g or more. In the present invention, the polyarylene-based copolymer means a copolymer including a polyarylene structure.

First, the segments having an ion exchange group in the polyarylene-based copolymer of the present invention will be described. The segments having an ion exchange group preferably has an ion exchange capacity of the segment of 3.5 meq/g or more, more preferably an ion exchange capacity of the segment of 4.5 meq/g or more, and still more preferably an ion exchange capacity of the segment of 6.0 meq/g or more.

At least one of the segments having an ion exchange group includes a polyarylene structure. It is preferable that all of the segments having an ion exchange group include polyarylene structures. Further, it is preferable that all of the segments having an ion exchange group are composed of polyarylene structures. Herein, the polyarylene structure will be described. The segments having an ion exchange group in the polyarylene-based copolymer of the present invention include a configuration in which the aromatic rings consisting the main chain are bonded through direct bonds. A higher ratio of the direct bonds to the total number of the bonds between the aromatic rings consisting the polymer main chain tends to provide excellent improvement of water resistance and proton conductivity. Specifically, when the total number of the bonds between the aromatic rings in the polyarylene structure is taken as 100%, a structure with the ratio of the direct bonds of 80% or more is preferred, a structure with the ratio of the direct bonds of 90% or more is more preferred, and a structure with the ratio of the direct bonds of 95% or more is still more preferred. Further, the bond other than the direct bond is a configuration in which the aromatic rings are bonded to each other through a divalent atom or divalent atom group. Examples of the divalent atom include groups represented by -O- and -S-, and examples of the divalent atom group include the groups represented by -C(CH₃)₂-, -C(CF₃)₂-, -CH=CH-, -SO₂-, and -CO-.

It is preferable that at least one of the segments having an ion exchange group include a structure represented by the following formula (4). Preferably, all of the segments having an ion exchange group include a structure represented by the following formula (4). More preferably, all of the segments having an ion exchange group are composed of a structure represented by the following formula (4) alone. 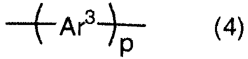 (wherein Ar³ represents a divalent aromatic group having an ion exchange group, and the divalent aromatic group may have at least one group selected from the group consisting of fluorine atom, an alkyl group having 1 to 20 carbon atoms, which may have a substituent, an aryl group having 6 to 20 carbon atoms, which may have a substituent, an acyl group having 2 to 20 carbon atoms, which may have a substituent, an arylsulfonyl group having 6 to 20 carbon atoms, which may have a substituent, an alkylsulfonyl group having I to 20 carbon atoms, which may have a substituent, and a cyano group as a substituent. p represents an integer of 1 or more. When p is 2 or more, Ar³'s present may be the same as or different from each other).

Here, p represents an integer of 1 or more, preferably 3 or more, more preferably in the range of 5 to 200, and still more preferably 10 to 100. The value of p of 3 or more is preferred in view of sufficient proton conductivity as a polymer electrolyte for a fuel cell. When the value of p is 200 or less, high long-term stability as a polyarylene-based copolymer can be obtained and the value is preferred in view of easy preparation of a polyarylene-based copolymer.

The "ion exchange group" represents a group regarding ion conduction, particularly a group regarding proton conduction herein. As the ion exchange group, an acid group is usually used. Examples of the acid group include a weak acid, a strong acid, and a super strong acid, but acid groups of a strong acid and a super strong are preferred. Examples of the acid group include acid groups including weak acids such as a phosphonic group and a carboxyl group; and strong acids such as a sulfo group, a sulfonimide group (-SO₂-NH-SO₂-R, wherein R represents a monovalent substituent having one atom, such as an alkyl group and an aryl group), and among these, a sulfo group and a sulfonimide group, which are the acid groups of the strong acids, are preferably used. Further, by substituting a hydrogen atom on the substituent (-R) of the aromatic ring and/or the sulfonimide group with the electron withdrawing group, it is preferable that the acid group of the strong acid functions as the acid group of the super strong acid as an effect of the electron withdrawing group. The ion exchange group that is present in the copolymer may be partially or fully exchanged with metal ions, quaternary ammonium ions, or the like to form a salt, but in order to use the polyarylene-based copolymer of the present invention as a polymer electrolyte membrane for a fuel cell, or the like, it is preferable that substantially all of the ion exchange groups be in the form of a free salt.

In the formula (4), Ar³ represents a divalent aromatic group. Herein, the divalent aromatic group represents a residue formed by removing two hydrogen atoms which are directly bonded to an aromatic ring included in an aromatic compound from the aromatic compound. Examples of the divalent aromatic group include the following formulae (4-1) to (4-14), and the divalent aromatic group is preferably (4-1).

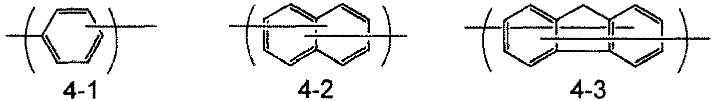

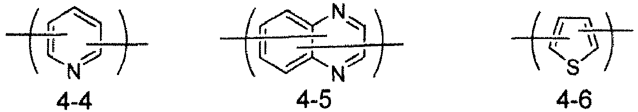

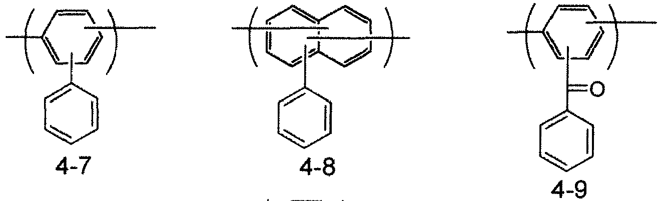

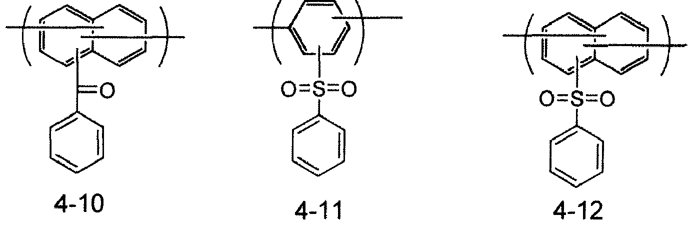

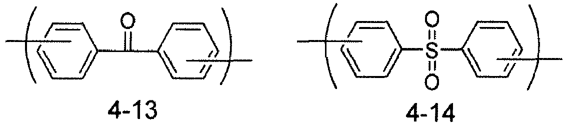

Furthermore, the divalent aromatic group may have at least one group selected from the group consisting of a fluorine atom, an alkyl group having 1 to 20 carbon atoms, which may have a substituent, an aryl group having 6 to 20 carbon atoms, which may have a substituent, an acyl group having 2 to 20 carbon atoms, which may have a substituent, an arylsulfonyl group having 6 to 20 carbon atoms, which may have a substituent, an alkylsulfonyl group having 1 to 20 carbon atoms, which may have a substituent, and a cyano group as a substituent.

Herein, examples of the alkyl group having I to 20 carbon atoms, which may have a substituent include alkyl groups having 1 to 20 carbon atoms, such as a methyl group, an ethyl group, an n-propyl group, an isopropyl group, an n-butyl group, a sec-butyl group, an isobutyl group, an n-pentyl group, a 2,2-dimethylpropyl group, a cyclopentyl group, an n-hexyl group, a cyclohexyl group, a 2-methylpentyl group, a 2-ethylhexyl group, a nonyl group, a dodecyl group, a hexadecyl group, an octadecyl group, and an icosyl group, and these alkyl groups which have a hydroxyl group, a cyano group, an amino group, a phenyl group, and a naphthyl group as a substituent and have 20 or less carbon atoms in total.

Examples of the aryl group having 6 to 20 carbon atoms, which may have a substituent, include aryl groups such as a phenyl group, a naphthyl group, a phenanthrenyl group, and an anthracenyl group, and these aryl groups which have at least one substituent selected from the following substituent groups and have 20 or less carbon atoms in total.

[Substituent Group] Alkyl groups having 1 to 14 carbon atoms, such as a methyl group, an ethyl group, an n-propyl group, an isopropyl group, an n-butyl group, a sec-butyl group, an isobutyl group, an n-pentyl group, a 2,2-dimethylpropyl group, a cyclopentyl group, an n-hexyl group, a cyclohexyl group, a 2-methylpentyl group, a 2-ethylhexyl group, a nonyl group, a dodecyl group, and these alkyl groups which have a hydroxyl group, a cyano group, an amino group, a phenyl group, a naphthyl group, or the like as a substituent, and have 14 or less carbon atoms in total, a hydroxyl group, a cyano group, an amino group, a phenyl group, a naphthyl group, and the like.

Examples of the acyl group having 2 to 20 carbon atoms, which may have a substituent, include acyl groups having 2 to 20 carbon atoms, such as an acetyl group, a propionyl group, a butyryl group, an isobutyryl group, a benzoyl group, 1-naphthoyl group, and a 2-naphthoyl group, these acyl groups which have at least one substituent selected from the following substituent group, and have 20 or less carbon atoms in total.

[Substituent Group] Alkyl groups having 1 to 18 carbon atoms, such as a methyl group, an ethyl group, an n-propyl group, an isopropyl group, an n-butyl group, a sec-butyl group, an isobutyl group, an n-pentyl group, a 2,2-dimethylpropyl group, a cyclopentyl group, an n-hexyl group, a cyclohexyl group, a 2-methylpentyl group, a 2-ethylhexyl group, a nonyl group, a dodecyl group, and these alkyl groups which have a hydroxyl group, a cyano group, an amino group, a phenyl group, a naphthyl group, or the like as a substituent, and have 18 or less carbon atoms in total, a hydroxyl group, a cyano group, an amino group, a phenyl group, a naphthyl group, and the like.

Examples of the arylsulfonyl group having 6 to 20 carbon atoms, which may have a substituent, include arylsulfonyl groups having 6 to 20 carbon atoms, such as a benzenesulfonyl group, a 1-naphthalenesulfonyl group, and a 2-naphthalenesulfonyl group, and these arylsulfonyl groups which have at least one substituent selected from the following substituent groups and have 20 or less carbon atoms in total.

[Substituent Group] Alkyl groups having 1 to 14 carbon atoms, such as a methyl group, an ethyl group, an n-propyl group, an isopropyl group, an n-butyl group, a sec-butyl group, an isobutyl group, an n-pentyl group, a 2,2-dimethylpropyl group, a cyclopentyl group, an n-hexyl group, a cyclohexyl group, a 2-methylpentyl group, a 2-ethylhexyl group, a nonyl group, a dodecyl group, and these alkyl groups which have a hydroxyl group, a cyano group, an amino group, a phenyl group, a naphthyl group, or the like as a substituent, and have 14 or less carbon atoms in total, a hydroxyl group, a cyano group, an amino group, a phenyl group, a naphthyl group, and the like.

Examples of the alkylsulfonyl group having 1 to 20 carbon atoms, which may have a substituent, include a mesyl group; and these alkylsulfonyl groups which have at least one substituent selected from the following substituent groups and have 20 or less carbon atoms in total.

[Substituent Group] Alkyl groups having 1 to 19 carbon atoms, such as a methyl group, an ethyl group, an n-propyl group, an isopropyl group, an n-butyl group, a sec-butyl group, an isobutyl group, an n-pentyl group, a 2,2-dimethylpropyl group, a cyclopentyl group, an n-hexyl group, a cyclohexyl group, a 2-methylpentyl group, a 2-ethylhexyl group, a nonyl group, a dodecyl group, and these alkyl groups which have a hydroxyl group, a cyano group, an amino group, a phenyl group, a naphthyl group, or the like as a substituent, and have 19 or less carbon atoms in total, a hydroxyl group, a cyano group, an amino group, a phenyl group, a naphthyl group, and the like.

Furthermore, the aromatic ring consisting the main chain of the aromatic group represented by Ar³ preferably has at least one ion exchange group which is directly bonded to the aromatic ring. Herein, the "main chain" refers to the longest chain that forms a polymer. This chain is constituted with carbon atoms that are bonded to each other by covalent bonds, and the chain may be interrupted with a nitrogen atom, a sulfur atom, or the like.

Furthermore, preferable examples of the structure represented by the formula (4) include a structure represented by the following formula (5). For the segment having such a structure, a starting material that is industrially readily available or a starting material that can be easily prepared can be used in the production of the polyarylene-based copolymer of the present invention as described later, which is thus preferable. 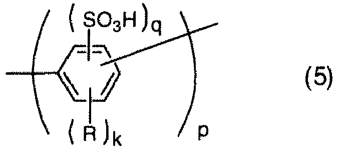 (wherein R represents a fluorine atom, an alkyl group having 1 to 20 carbon atoms, which may have a substituent, an aryl group having 6 to 20 carbon atoms, which may have a substituent, an acyl group having 2 to 20 carbon atoms, which may have a substituent, an arylsulfonyl group having 6 to 20 carbon atoms, which may have a substituent, an alkylsulfonyl group having 1 to 20 carbon atoms, which may have a substituent, or a cyano group. Here, k represents an integer of 0 to 3, and q represents an integer of 1 or 2, and k+q equals an integer of I to 4. Further, when k is 2 or 3, R's present may be the same as or different from each other. p represents an integer of 1 or more).

Herein, R is a fluorine atom, an alkyl group having 1 to 20 carbon atoms, which may have a substituent, an aryl group having 6 to 20 carbon atoms, which may have a substituent, an acyl group having 2 to 20 carbon atoms, which may have a substituent, an arylsulfonyl group having 6 to 20 carbon atoms, which may have a substituent, an alkylsulfonyl group having I to 20 carbon atoms, which may have a substituent, or a cyano group, exemplified as a substituent of the divalent aromatic group, and is a group that does not interfere with the reaction in the polymerization reaction. The number of the substituents, k, is preferably 0 or 1, and particularly preferably 0.

In the polyarylene-based copolymer of the present invention, the polystyrene-equivalent weight-average molecular weight of the segments having an ion exchange group is from 10,000 to 250,000, preferably from 10,000 to 160,000, more preferably from 15,000 to 120,000, still more preferably from 20,000 to 80,000. A polystyrene-equivalent weight-average molecular weight is preferably 10,000 or more in terms of sufficient proton conductivity as a polymer electrolyte for a fuel cell. Further, when the polystyrene-equivalent weight-average molecular weight is 250,000 or less, high long-term stability as the polyarylene-based copolymer can be obtained and the preparation becomes easier, which is thus preferable. Further, when the polystyrene-equivalent weight-average molecular weight is 250,000 or less, the decomposed product is not easily eluted from the polymer electrolyte membrane even upon decomposition, and thus, the poisoning of the catalyst is suppressed, and accordingly, long-term stability of the electricity generating characteristics can be obtained, which and thus preferable.

The weight-average molecular weight of the segments having an ion exchange group may be measured before or after the copolymerization in a suitable production method as described later, in which precursors from which the segments having an ion exchange group are derived and precursors from which the segments having substantially no ion exchange group are derived are subjected to copolymerization.

The weight-average molecular weight is measured by means of gel permeation chromatography (GPC).

When the precursors from which the segments having an ion exchange group are derived are of a monomer type, the weight-average molecular weight is measured after the copolymerization. When the precursors from which the segments having an ion exchange group are derived are of a polymer type, the weight-average molecular weight may be measured either before or after the copolymerization. When the polystyrene-equivalent weight-average molecular weight of the precursors is less than 10,000, the coupling between the precursors easily occurs, and there is a possibility that weight-average molecular weight of the segments having an ion exchange group after the copolymerization changes, and therefore, it is preferable that the weight-average molecular weight be measured after the copolymerization.

The weight-average molecular weight of the segments having an ion exchange group before the copolymerization is measured after the precursors from which the segments having an ion exchange group are derived are converted to the structures of the segments having an ion exchange group. That is, when the precursors from which the segments having an ion exchange group are derived have no ion exchange group, the value measured after the introduction of the ion exchange group is a weight-average molecular weight of the segments having an ion exchange group, and when the ion exchange groups of the precursors from which the ion exchange groups of the segments having an ion exchange group are derived are ion exchange precursor groups, the value after the derivation into the ion exchange groups is a weight-average molecular weight of the segments having an ion exchange group.

The weight-average molecular weight of the segments having an ion exchange group after the copolymerization is measured after the decomposition of the segments having substantially no ion exchange group included in the polyarylene-based copolymer.

Examples of the decomposition method include methods using acids, bases, radicals, oxidants, reducing agents, heat, light, and the like. Depending on the difference in the structures between the segments having an ion exchange group and the segments having substantially no ion exchange group, a method for selective decomposition of the segments having substantially no ion exchange group is chosen. For example, bases are preferably used for the decomposition of the segments having substantially no ion exchange group of an aromatic block copolymer including segments having an ion exchange group composed of a polyarylene structure and segments having substantially no ion exchange group having ether bonds in the main chain. Specifically, known methods described in JP-A-2008-031452 or JP-A-2009-173902 can be used. Specifically, a method in 2200 parts by weight of dimethyl sulfoxide, 2 to 13 parts by weight of a methanol solution including 25% by weight of tetramethylammonium hydroxide, and I part by weight of the matrix polymer are mixed to obtain a solution in which the mixed matrix polymer is fully or substantially fully dissolved, and the solution is heated at 100°C for 2 hours can be used. For example, when the ion exchange capacity of the matrix polymer is less than 3.5 meq/g, a method in 2200 parts by weight of dimethyl sulfoxide, 2 parts by weight of a methanol solution including 25% by weight of tetramethylammonium hydroxide, and 1 part by weight of the matrix polymer are mixed to obtain a solution in which the mixed matrix polymer is fully or substantially fully dissolved, and the solution is heated at 100°C for 2 hours can be used as a suitable method for decomposing ether bonds, and further, when the ion exchange capacity of the matrix polymer is 3.5 meq/g or more, a method in 2200 parts by weight of dimethyl sulfoxide, 13 parts by weight of a methanol solution including 25% by weight of tetramethylammonium hydroxide, and 1 part by weight of the matrix polymer are mixed to obtain a solution in which the mixed matrix polymer is fully or substantially fully dissolved, and the solution is heated at 100°C for 2 hours can be used as a suitable method for decomposing ether bonds. Herein, "the mixed matrix polymer is substantially fully dissolved" means that 95% by weight or more of the mixed matrix polymer is dissolved.

The ion exchange precursor group refers to a group which will become an ion exchange group without involving the change in the structure other than the ion exchange precursor groups of the polyarylene-based copolymer precursors. The ion exchange precursor group becomes an ion exchange group through the reactions of preferably 3 or less steps, more preferably 2 or less steps, and still more preferably 1 step.

Next, the segments having substantially no ion exchange group in the polyarylene-based copolymer of the present invention will be described. For the segments having substantially no ion exchange group, the ion exchange capacity of the segment is 0.5 meq/g or less, the ion exchange capacity of the segment is preferably 0.2 meq/g or less, and the ion exchange capacity of the segment is 0.5 meq/g or less, the ion exchange capacity of the segment is more preferably 0.0 meq/g.

It is preferable that the segments having substantially no ion exchange group have electron withdrawing groups and have ether bonds or thioether bonds in the main chain of the segments. Further, the segments having substantially no ion exchange group preferably have a divalent aromatic residue formed by removing two hydrogen atoms of the an aromatic ring from a compound having an aromatic ring as a structural unit, and it is preferable that an electron withdrawing group directly bonded to the divalent aromatic residue be present. It is also preferable that the divalent aromatic residue constitute a part of the main chain.

Examples of the electron withdrawing group include a divalent electron withdrawing group and a monovalent electron withdrawing group, and examples of the divalent electron withdrawing group include a sulfonyl group, a carbonyl group, and a fluorine-substituted alkylene group, and a sulfonyl group is preferred. Further, examples of the monovalent electron withdrawing group include a fluorine atom, a cyano group, and a nitro group, and a cyano group is preferred.

It is preferable that at least one of the segments having substantially no ion exchange group include a structure represented by the following formula (1). Preferably, all of the segments having substantially no ion exchange group include a structure represented by the following formula (1). 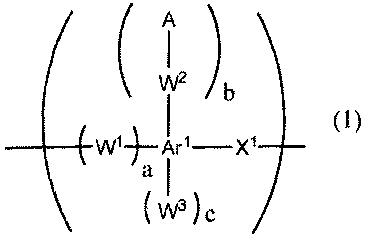 (wherein Ar¹ represents an arylene group which may have a substituent, and the arylene group may have a group other than at least one group selected from the group represented by -(W²-A) and a group represented by W³ as a substituent. W¹ and W² each independently represent a divalent electron withdrawing group. W³ represents a monovalent electron withdrawing group. A represents a hydrogen atom, a fluorine atom, an alkyl group having I to 20 carbon atoms, which may have a substituent, an alkoxy group having 1 to 20 carbon atoms, which may have a substituent, an aryl group having 6 to 20 carbon atoms, which may have a substituent, or an aryloxy group having 6 to 20 carbon atoms, which may have a substituent. X¹ represents a group represented by -O- or a group represented by -S-. Here, a represents an integer of 0 or I, and b and c each independently represent an integer of 0 or more, and a+b+c equals 1 or more. Further, when b is 2 or more, W²'s present may be the same as or different from each other, and A's present may be the same as or different from each other. When c is 2 or more, W³'s present may be the same as or different from each other).

The structural unit represented by the formula (1) has at least one electron withdrawing group, and also has an ether bond or a thioether bond. It is preferable that the structural unit represented by the formula (1) be included in the main chain of the segments having substantially no ion exchange group.

The structural unit represented by the formula (1) preferably occupies 10% by weight or more, more preferably 20% by weight or more, and still more preferably 30% by weight or more, with respect to 100% by weight of the total amount of the segments having substantially no ion exchange group.

Ar¹ in the formula (1) represents an arylene group. Examples of the arylene group include divalent monocyclic aromatic groups such as a 1,3-phenylene group and a 1,4-phenylene group, divalent condensed ring aromatic groups such as a 1,3-naphthalenediyl group, a 1,4-naphthalenediyl group, a 1,5-naphthalenediyl group, a 1,6-naphthalenediyl group, a 1,7-naphthalenediyl group, a 2,6-naphthalenediyl group and a 2,7-naphthalenediyl group, and divalent aromatic heterocyclic groups such as a pyridinediyl group, a quinoxalinediyl group, and a thiophenediyl group. The arylene group is preferably a divalent monocyclic aromatic group.

Furthermore, the arylene group may have a group selected from an alkyl group having I to 20 carbon atoms, which may have a substituent, an alkoxy group having 1 to 20 carbon atoms, which may have a substituent, an aryl group having 6 to 20 carbon atoms, which may have a substituent, an aryloxy group having 6 to 20 carbon atoms, which may have a substituent as a substituent. Specific examples of the alkyl group having I to 20 carbon atoms and the aryl group having 6 to 20 carbon atoms, each of which may have a substituent include those as described above.

Furthermore, examples of the alkoxy group having I to 20 carbon atoms, which may have a substituent, include alkoxy groups having 1 to 20 carbon atoms, such as a methoxy group, an ethoxy group, a n-propyloxy group, an isopropyloxy group, a n-butyloxy group, a sec-butyloxy group, a tert-butyloxy group, an isobutyloxy group, a n-pentyloxy group, a 2,2-dimethylpropyloxy group, a cyclopentyloxy group, a n-hexyloxy group, a cyclohexyloxy group, a 2-methylpentyloxy group, a 2-ethylhexyloxy group, a dodecyloxy group, a hexadecyloxy group, and an icosyloxy group, and these alkoxy groups that are substituted with a hydroxyl group, a cyano group, an amino group, a methoxy group, an ethoxy group, an isopropyloxy group, a phenyl group, a naphthyl group, a phenoxy group, a naphthyloxy group, or the like, and have 20 or less carbon atoms in total.

Examples of the aryloxy group having 6 to 20 carbon atoms, which may have a substituent, include aryloxy groups such as a phenoxy group, a naphthyloxy group, a phenanthrenyloxy group and an anthracenyloxy group, and these aryloxy groups that have at least one selected from the following substituent group as a substituent and have 20 or less carbon atoms in total.

[Substituent Group] Alkyl groups having 1 to 14 carbon atoms, such as a methyl group, an ethyl group, an n-propyl group, an isopropyl group, an n-butyl group, a sec-butyl group, an isobutyl group, an n-pentyl group, a 2,2-dimethylpropyl group, a cyclopentyl group, an n-hexyl group, a cyclohexyl group, a 2-methylpentyl group, a 2-ethylhexyl group, a nonyl group, a dodecyl group, and these alkyl groups which have a hydroxyl group, a cyano group, an amino group, a phenyl group, a naphthyl group, or the like as a substituent, and have 14 or less carbon atoms in total, a hydroxyl group, a cyano group, an amino group, a phenyl group, a naphthyl group, and the like.

Examples of the divalent electron withdrawing group represented by each of W¹ and W² in the formula (1) include a sulfonyl group, a carbonyl group, or a fluorine-substituted alkylene group, and a sulfonyl group is preferred. Further, examples of the monovalent electron withdrawing group represented by W³ in the formula (3) include a fluorine atom, a cyano group, and a nitro group, and a cyano group is preferred.

A in the formula (1) represents a hydrogen atom, a fluorine atom, an alkyl group having 1 to 20 carbon atoms, which may have a substituent, an alkoxy group having 1 to 20 carbon atoms, which may have a substituent, an aryl group having 6 to 20 carbon atoms, which may have a substituent, or an aryloxy group having 6 to 20 carbon atoms, which may have a substituent. Specific examples of the alkyl group having 1 to 20 carbon atoms, which may have a substituent, the alkoxy group having 1 to 20 carbon atoms, which may have a substituent, the aryl group having 6 to 20 carbon atoms, which may have a substituent, and the aryloxy group having 6 to 20 carbon atoms, which may have a substituent, include those as described above.

In the formula (1), a represents an integer of 0 or 1, and b and c each independently represent an integer of 0 or more. a+b+c equals 1 or more. Here, a is preferably 1, b is preferably 0 or 1, and c is preferably an integer of 0 to 4.

Examples of the structural unit represented by the general formula (1) include the structural units of (1-1) to (1-12). The segments having these structural units are preferable since they secure high solvent-solubility of the polymer electrolyte including the polyarylene-based copolymer of the present invention, and easily provide the obtained polymer electrolyte with heat resistance and durability. Among these, as the general formula (1), a group represented by the following (1-1), (1-3), or (1-9), which may have a substituent, is preferred, and a group represented by (1-1) is particularly preferred.

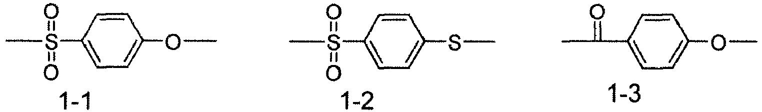

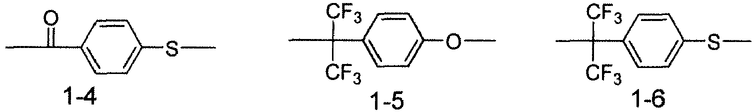

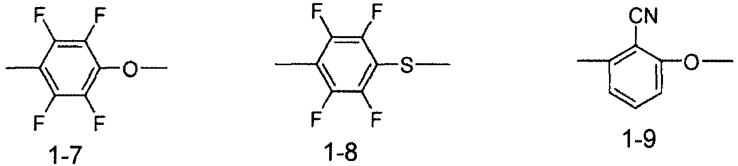

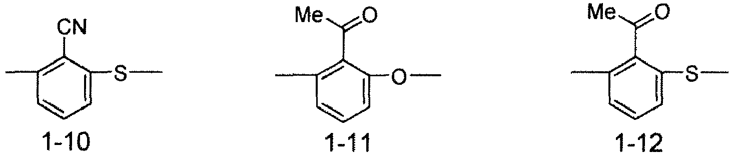

The segments having these structural units are preferable since starting materials that are industrially readily available in the production can be used.

The structural unit represented by the formula (1) is preferably a structural unit represented by the following formula (2). 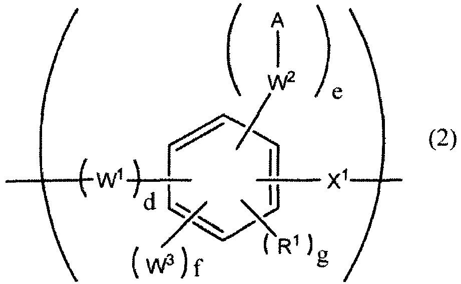 (wherein W¹, W², W³, X¹, and A have the same definitions as in the formula (1). R¹ represents an alkyl group having 1 to 20 carbon atoms, which may have a substituent, an alkoxy group having 1 to 20 carbon atoms, which may have a substituent, an aryl group having 6 to 20 carbon atoms, which may have a substituent, or an aryloxy group having 6 to 20 carbon atoms, which may have a substituent. Here, d represents an integer of 0 or 1, and e, f, and g each independently represent an integer of 0 to 4. d+e+f equals an integer of 1 to 5, and e+f+g equals an integer of 0 to 4. Further, when e is 2 or more, W²'s present may be the same as or different from each other, and A's present may be the same as or different from each other. When f is 2 or more, W³'s present may be the same as or different from each other. When g is 2 or more, R¹'s present may be the same as or different from each other).

Examples of the structural unit represented by the above formula (2) include the structural units of (1-1) to (1-12).

Furthermore, it is preferable that the segments having substantially no ion exchange group include a structural unit represented by the following formula (3). The structural unit represented by the following formula (3) may have the structural unit represented by the formula (1), and the structural unit represented by the following formula (1) may have the structural unit represented by the formula (3). The segments having these structural units are preferable since they easily provide the polymer electrolyte including the polyarylene-based copolymer of the present invention with heat resistance and mechanic durability and starting materials that are industrially readily available or starting materials that can be easily prepared can be used in the production of the segments.

—(̵Ar²-X²)̵— (3)

(wherein Ar² represents a divalent aromatic group, and the divalent aromatic group may have at least one group selected from the group consisting of a fluorine atom, an alkyl group having 1 to 20 carbon atoms, which may have a substituent, an alkoxy group having 1 to 20 carbon atoms, which may have a substituent, an aryl group having 6 to 20 carbon atoms, which may have a substituent, an aryloxy group having 6 to 20 carbon atoms, which may have a substituent, an acyl group having 2 to 20 carbon atoms, which may have a substituent, an arylsulfonyl group having 6 to 20 carbon atoms, which may have a substituent, an alkylsulfonyl group having 1 to 20 carbon atoms, which may have a substituent, and a cyano group as a substituent. X² represents a group represented by -O- or a group represented by -S-).

In the formula (3), Ar² represents a divalent aromatic group. Herein, the divalent aromatic group represents a residue formed by removing two hydrogen atoms which are directly bonded to an aromatic ring included in an aromatic compound from the aromatic compound. Examples of the divalent aromatic group include the aromatic groups of the following formulae (3-1) to (3-27).

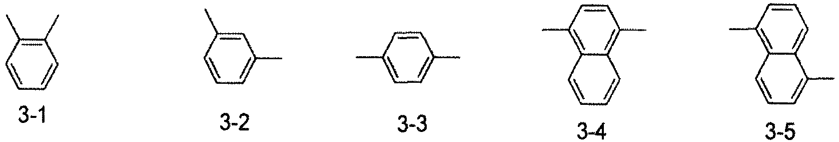

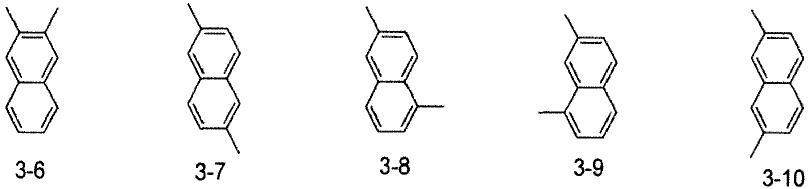

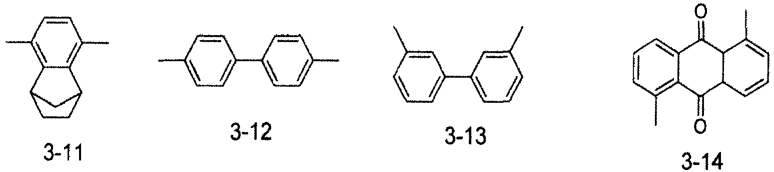

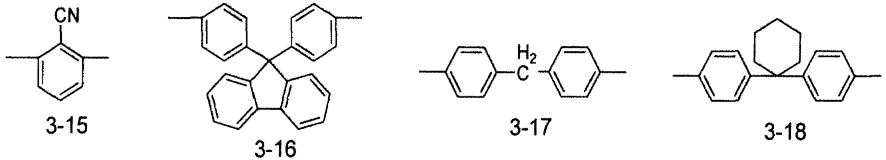

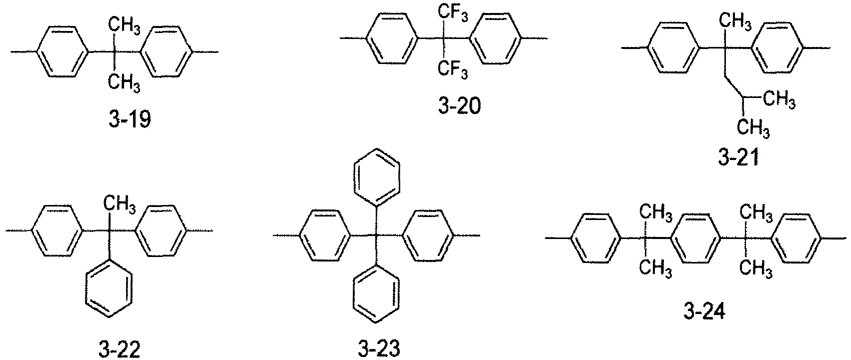

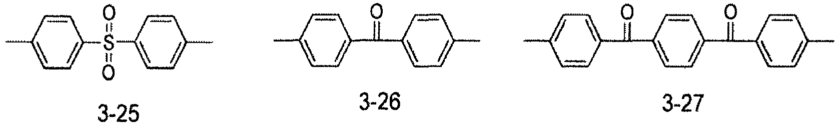

Furthermore, Ar² is a group which may be included in Ar¹ as a substituent, and among these, Ar² is preferably a group represented by (3-3), (3-7), (3-12), (3-15), (3-16), (3-19), (3-20), (3-23), (3-25), or (3-26), which may have a substituent, more preferably (3-12), (3-15), (3-16), (3-19), (3-20), (3-23), (3-25), or (3-26), which may have a substituent, and still more preferably a group represented by (3-12), (3-16), (3-19), (3-20), or (3-25), which may have a substituent.

The segments having these structural units are preferable since they easily provide the polymer electrolyte including the polyarylene-based copolymer of the present invention with heat resistance and mechanic durability and starting materials that are industrially readily available or starting materials that can be easily prepared can be used in the production of the segments.

Examples of the segments having substantially no ion exchange group include the structures represented by the following formulae. Among these, preferable examples of the segment include (ba), (be), (bf), (bi), (bk), (bn), (bo), (bp), (bq), (br), and (bs), and more preferable examples of the segment include (ba), (be), (bf), (bk), (bp), (br), and (bs). The segments having these structural units are preferable since they secure high solvent-solubility of the polymer electrolyte including the polyarylene-based copolymer of the present invention, and easily provide the obtained polymer electrolyte with heat resistance and durability. Further, the segments having these structural units are preferable since they can be prepared using starting materials that can be easily produced and are industrially readily available.

In the following formulae, "h" represents a molar composition ratio, and h is preferably from 0.51 to 0.90, more preferably from 0.55 to 0.90, and still more preferably from 0.60 to 0.85.

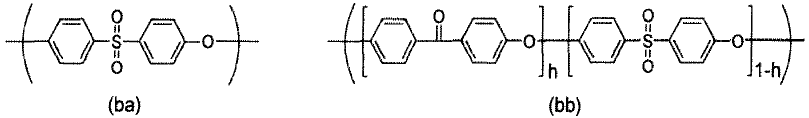

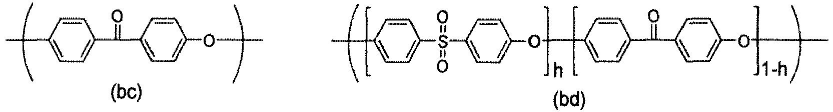

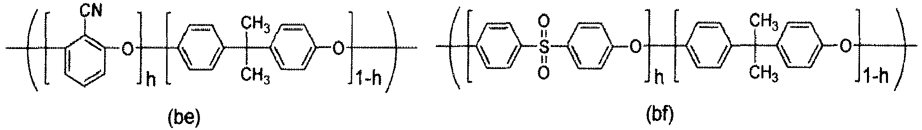

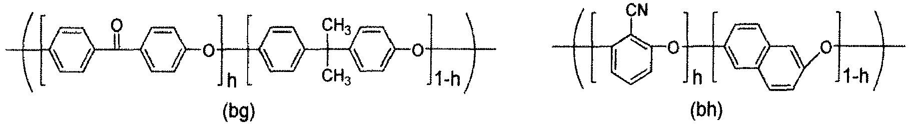

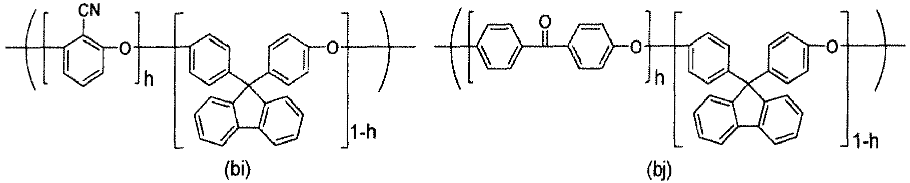

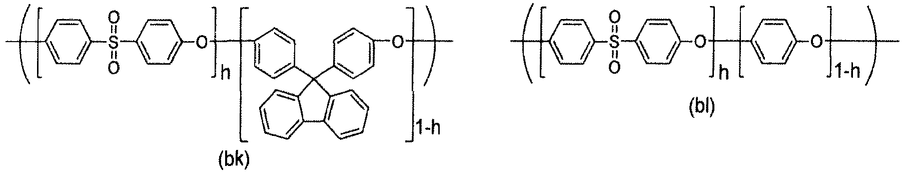

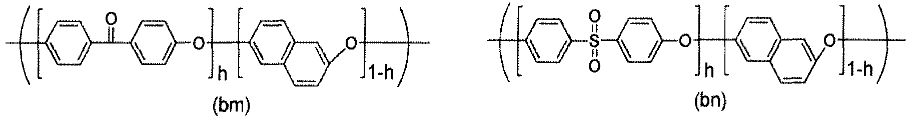

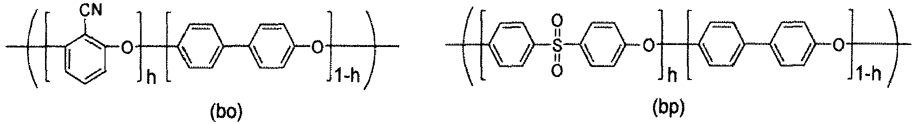

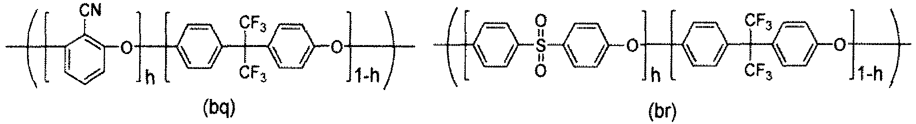

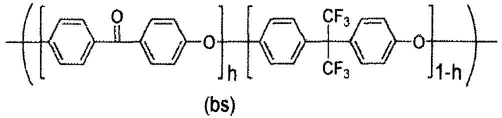

Examples of a suitable method for producing the polyarylene-based copolymer according to the present invention include a method in which precursors from which the segments having an ion exchange group are derived and precursors from which the segments having substantially no ion exchange group are derived are subjected to copolymerization.

The precursors from which the segments having an ion exchange group are derived, and the precursors from which the segments having substantially no ion exchange group are derived may be of a monomer type or of a polymer type.

That is, examples of the production method include:
a method in which monomer-type precursors from which the segments having an ion exchange group are derived and polymer-type precursors from which the segments having substantially no ion exchange group are derived are subjected to copolymerization,
a method in which polymer-type precursors from which the segments having an ion exchange group are derived and monomer-type precursors from which the segments having substantially no ion exchange group are derived are subjected to copolymerization, and
a method in which polymer-type precursors from which the segments having an ion exchange group are derived and polymer-type precursors from which the segments having substantially no ion exchange group are derived are subjected to copolymerization.

When the precursors from which the segments having an ion exchange group are derived are of a monomer type or of a polymer type having a polystyrene-equivalent weight-average molecular weight of less than 10,000, the weight-average molecular weight of the segments having an ion exchange group is controlled by the compositional ratio of the precursors from which the segments having an ion exchange group are derived, and the precursors from which the segments having substantially no ion exchange group are derived to be provided to the copolymerization, and the molecular weights of the precursors from which the segments having substantially no ion exchange group are derived. When the precursors from which the segments having an ion exchange group are derived to be provided to the copolymerization have a high compositional ratio, the weight-average molecular weight of the segments having an ion exchange group tends to increase. Further, as the molecular weight of the precursors from which the segments having substantially no ion exchange group are derived is higher, the weight-average molecular weight of the segments having an ion exchange group tends to increase.

That is, by appropriately adjusting the compositional ratio of the precursors from which the segments having an ion exchange group are derived, and the precursors from which the segments having substantially no ion exchange group are derived provided for copolymerization, and the molecular weight of the precursors from which the segments having substantially no ion exchange group are derived, a polyarylene-based copolymer having a polystyrene-equivalent weight-average molecular weight of the segments having an ion exchange group in the above-described range can be obtained.

When the polystyrene-equivalent weight-average molecular weight of the segments having an ion exchange group is higher than the above-described range, it can be suppressed to the above-described range by lowering the molecular weight of the precursors from which the segments having substantially no ion exchange group are derived. Further, when the polystyrene-equivalent weight-average molecular weight of the segments having an ion exchange group is lower than the above-described range, it can be increased to the above-described range by increasing the molecular weight of the precursors from which the segments having substantially no ion exchange group are derived.

When the precursors from which the segments having an ion exchange group are derived are of a polymer type, the weight-average molecular weight of the segments having an ion exchange group is controlled by the molecular weight of the precursors from which the segments having an ion exchange group are derived.

That is, by setting the weight-average molecular weight of the precursors from which the segments having an ion exchange group are derived to the range of the polystyrene-equivalent weight-average molecular weight of the segments having an ion exchange group, a -based copolymer in which the polystyrene-equivalent weight-average molecular weight of the segments having an ion exchange group is the above-described range can be obtained.

However, a case where an ion exchange group is introduced after the copolymerization, or a case where an ion exchange precursor group is derived into an ion exchange group after the copolymerization is excluded. In this case, after an ion exchange group is introduced with the precursors from which the segments having an ion exchange group are derived before the copolymerization, or before an ion exchange precursor group of the precursors from which the segments having an ion exchange group are derived before the copolymerization is derived into an ion exchange group, a polyarylene-based copolymer in which the weight-average molecular weight of the segments having an ion exchange group is within the above-described range can be obtained by setting the polystyrene-equivalent weight-average molecular weight within the above-described range.

The precursors from which the segments having an ion exchange group are derived may or may not have an ion exchange group prior to the copolymerization. When the precursors from which the segments having an ion exchange group are derived has no ion exchange group, an ion exchange group may be introduced after the precursors from which the segments having an ion exchange group are derived, and the precursors from which the segments having substantially no ion exchange group are derived are subjected to copolymerization.

For example, when the segments having an ion exchange group include the structure represented by the formula (4), the method for introducing an ion exchange group which is bonded to the aromatic ring consisting the main chain in Ar³ may be a method in which polymerization is carried out in advance using a precursor having an ion exchange group or a method in which a polyarylene-based copolymer precursor is prepared in advance from a precursor having no ion exchange group, and an ion exchange group is introduced with the precursor.

Among them, in the former method, the amount of the ion exchange groups introduced or the substitution positions can be accurately controlled, and thus is more preferable.

The polyarylene-based copolymer of the present invention can be produced by performing polymerization of a monomer represented by the following formula (4-h) and the precursors of the segments having substantially no ion exchange group including the structural unit represented by the formula (1) as described later by a condensation reaction, for example, under the co-existence of a transition metal complex, using monomers having an ion exchange group.

Q-Ar¹⁰-Q (4-h)

Herein, Ar¹⁰ has an ion exchange group and/or an ion exchange precursor group, and is a divalent aromatic group which may have a group selected from a fluorine atom, an alkyl group having 1 to 20 carbon atoms, which may have a substituent, an aryl group having 6 to 20 carbon atoms, which may have a substituent, an acyl group having 2 to 20 carbon atoms, which may have a substituent, an arylsulfonyl group having 6 to 20 carbon atoms, which may have a substituent, an alkylsulfonyl group having I to 20 carbon atoms, which may have a substituent, and a cyano group. Two Q's each represent a leaving group, and two Q's may be the same as or different from each other.

Examples of Ar¹⁰ in the formula (4-h) include the same groups as the specific examples of Ar³. Further, Ar¹⁰ may be substituted with the same group as the specific example of the substituents of Ar³. The leaving group described above represents a group to leave in condensation reaction, and specific examples thereof include halogen atoms such as a chlorine atom, a bromine atom, and an iodine atom, and sulfonyloxy groups such as a p-toluenesulfonyloxy group, a methanesulfonyloxy group, and a trifluoromethanesulfonyloxy group.

Examples of the monomer represented by the formula (4-h) and having a sulfo group as a preferable ion exchange group include 2,4-dichlorobenzenesulfonic acid, 2,5-dichlorobenzenesulfonic acid, 3,5-dichlorobenzenesulfonic acid, 2,4-dibromobenzenesulfonic acid, 2,5-dibromobenzenesulfonic acid, 3,5-dibromobenzenesulfonic acid, 2,4-diiodobenzenesulfonic acid, 2,5-diiodobenzenesulfonic acid, 3,5-diiodobenzenesulfonic acid, 2,4-dichloro-5-methylbenzenesulfonic acid, 2,5-dichloro-4-methylbenzenesulfonic acid, 2,4-dibromo-5-methylbenzenesulfonic acid, 2,5-dibromo-4-methylbenzenesulfonic acid, 2,4-diiodo-5-methylbenzenesulfonic acid, 2,5-diiodo-4-methylbenzenesulfonic acid, 2,4-dichloro-5-methoxybenzenesulfonic acid, 2,5-dichloro-4-methoxybenzenesulfonic acid, 2,4-dibromo-5-methoxybenzenesulfonic acid, 2,5-dibromo-4-methoxybenzenesulfonic acid, 2,4-diiodo-5-methoxybenzenesulfonic acid, 2,5-diiodo-4-methoxybenzenesulfonic acid, 3,3'-dichlorobiphenyl-2,2'-disulfonic acid, 3,3'-dibromobiphenyl-2,2'-disulfonic acid, 3,3'-diiodobiphenyl-2,2'-disulfonic acid, 4,4'-dichlorobiphenyl-2,2'-disulfonic acid, 4,4'-dibromobiphenyl-2,2'-disulfonic acid, 4,4'-diiodobiphenyl-2,2'-disulfonic acid, 4,4'-dichlorobiphenyl-3,3'-disulfonic acid, 4,4'-dibromobiphenyl-3,3'-disulfonic acid, 4,4'-diiodobiphenyl-3,3'-disulfonic acid, 5,5'-dichlorobiphenyl-2,2'-disulfonic acid, 5,5'-dibromobiphenyl-2,2'-disulfonic acid, and 5,5'-diiodobiphenyl-2,2'-disulfonic acid.

Furthermore, in the case of other ion exchange groups, the sulfo-groups of monomers described above as examples can be selected in place of ion exchange groups such as a carboxylic group and a phosphonic group. Monomers having these other ion exchange groups are also industrially readily available or can be prepared using known production methods.

In addition, the ion exchange group of the monomers described above as examples may be in the form of a salt, and particularly use of monomers having ion exchange groups in the form of a salt is preferable from the viewpoint of polymerization reactivity. The salt is preferably an alkaline metal salt, and particularly preferably a Li salt, a Na salt, or a K salt.

Examples of the ion exchange precursor group include sulfonic acid precursor groups, phosphonic acid precursor groups, and carboxylic acid precursor groups.

The ion exchange precursor group is preferably one having a form in which an ion exchange group forms an ester or an amide and is protected. Examples of sulfonic acid precursor groups as preferable ion exchange precursor groups include sulfonate ester (-SO₃R^{c}, wherein R^{c} represents an alkyl group having 1 to 20 carbon atoms), or sulfonamide (-SO₂N(R^{d})(R^{e}), wherein R^{d} and R^{e} each independently represent a hydrogen atom, an alkyl group having I to 20 carbon atoms, or an aromatic group having 3 to 20 carbon atoms). Among these, more preferable examples of the sulfonic acid precursor group include sulfonic acid ester groups.

Examples of the sulfonate ester include a methyl sulfonate group, an ethyl sulfonate group, an n-propyl sulfonate group, an isopropyl sulfonate group, an n-butyl sulfonate group, a sec-butyl sulfonate group, a tert-butyl sulfonate group, an n-pentyl sulfonate group, a neopentyl sulfonate group, an n-hexyl sulfonate group, a cyclohexyl sulfonate group, an n-heptyl sulfonate group, an n-octyl sulfonate group, an n-nonyl sulfonate group, an n-decylsulfonate group, an n-dodecyl sulfonate group, an n-undecylsulfonate group, an n-tridecylsulfonate group, an n-tetradecyl sulfonate group, an n-pentadecylsulfonate group, an n-hexadecylsulfonate group, an n-heptadecyl sulfonate group, an n-octadecylsulfonate group, an n-nonadecylsulfonate, and an n-eicosyl sulfonate group, and are preferably a sec-butyl sulfonate group, a neopentyl sulfonate group, and a cyclohexyl sulfonate group. These sulfonate ester groups may have a group not involved in the polymerization reaction as a substituent.

Furthermore, examples of the sulfonamides include a sulfonamide group, an N-methylsulfonamide group, an N,N-dimethylsulfonamide group, an N-ethylsulfonamide group, an N,N-diethylsulfonamide group, an N-n-propyl sulfonamide group, a di-n-propylsulfonamide group, an N-isopropyl sulfonamide group, an N,N-diisopropylsulfonamide group, an N-n-butylsulfonamide group, an N,N-di-n-butylsulfonamide group, an N-sec-butylsulfonamide group, an N,N-di-sec-butyl sulfonamide group, an N-tert-butylsulfonamide group, an N,N-di-tert-butylsulfonamide group, an N-n-pentylsulfonamide group, an N-neopentylsulfonamide group, an N-n-hexylsulfonamide group, an N-cyclohexylsulfonamide group, an N-n-heptylsulfonamide group, an N-n-octylsulfonamide group, an N-n-nonylsulfonamide group, an N-n-decylsulfonamide group, an N-n-dodecylsulfonamide group, an N-n-undecylsulfonamide group, an N-n-tridecylsulfonamide group, an N-n-tetradecylsulfonamide group, an N-n-pentadecylsulfonamide group, an N-n-hexadecylsulfonamide group, an N-n-heptadecylsulfonamide group, an N-n-octadecylsulfonamide group, an N-n-nonadecylsulfonamide group, an N-n-eicosylsulfonamide group, an N,N-diphenylsulfonamide group, an N,N-bistrimethylsilylsulfonamide group, an N,N-bis-tert-butyldimethylsilylsulfonamide group, a pyrrolylsulfonamide group, a pyrrolidinylsulfonamide group, a piperidinylsulfonamide group, a carbazolylsulfonamide group, a dihydroindolylsulfonamide and dihydroisoindolylsulfonamide group, and are preferably N,N-diethylsulfonamide group, an N-n-dodecylsulfonamide group, a pyrrolidinylsulfonamide and piperidinylsulfonamide. All of these sulfonamide groups may have a group not involved in the polymerization reaction as a substituent.

Furthermore, as the sulfonic acid precursor group, a mercapto group can be used. The mercapto group can be converted into a sulfo group by using an appropriate oxidizing agent to oxidize the mercapto group.

Next, a method will be described, in which after a polyarylene-based copolymer precursor is produced from a monomer having no ion exchange group in advance, ion exchange groups are introduced. In this case, a polyarylene-based copolymer precursor can be produced, for example, by performing polymerization of a monomer represented by the following general formula (4-i) and the precursors of the segments having substantially no ion exchange group including the structural unit represented by the formula (1) as described later by a condensation reaction, for example, under the co-existence of a transition metal complex.

Q-Ar¹¹-Q (4-i)

(wherein Ar¹¹ represents a divalent arylene group capable of becoming Ar¹⁰ of the formula (4-h) by introducing an ion exchange group, and Q has the same definition as described above, and two Q's may be the same as or different from each other).

The polymer of the present invention can be produced by a series of operations in which a monomer represented by the formula (4-i) and, for example, the precursors of the segments having substantially no ion exchange group including the structural unit represented by the formula (1) that are preferable as the segments having substantially no ion exchange group are copolymerized by a condensation reaction to obtain a polyarylene-based copolymer precursor having both a structural unit represented by the following formula (4-j) and the structural unit represented by the formula (1), and an ion exchange group is introduced to an aromatic ring consisting the main chain in the structural unit represented by the formula (4-j) of the polyarylene-based copolymer precursor.

—(̵Ar¹²)̵— (4-j)

(wherein Ar¹² represents a divalent aromatic group capable of becoming Ar³ of the formula (4) by introducing an ion exchange group).

Ar¹¹ and Ar¹² each have a structure capable of introducing at least one ion exchange group. The structure capable of introducing the ion exchange group in Ar¹¹ and Ar¹² means a structure having a functional group, such as a hydrogen atom directly bonded to an aromatic ring, capable of introducing an ion exchange group. When a sulfo group is introduced to an aromatic ring by an electrophilic substitution reaction, the hydrogen atom bonded to an aromatic ring is regarded as a functional group capable of introducing a sulfo-group. Further, specific examples of the monomer represented by the formula (4-i) include 1,3-dichlorobenzene, 1,4-dichlorobenzene, 1,3-dichloro-4-methoxybenzene, 1,4-dichloro-3-methoxybenzene, 4,4'-dichlorobiphenyl, 4,4'-dichloro-3,3'-dimethylbiphenyl, 4,4'-dichloro-3,3'-dimethoxybiphenyl, 1,4-dichloronaphthalene, 1,5-dichloronaphthalene, 2,6-dichloronaphthalene, and 2,7-dichloronaphthalene. Monomers may be used in which chlorine atoms in these monomers are replaced by halogen atoms such as a bromine atom and an iodine atom, and sulfonyloxy groups such as a p-toluenesulfonyloxy group, a methanesulfonyloxy group, and a trifluoromethanesulfonyloxy group.

A method for introducing sulfo groups as preferable ion exchange groups to a structural unit represented by the formula (4-j) includes a method in which an obtained polyarylene-based copolymer precursor is dissolved or dispersed in concentrated sulfuric acid, or at least partially dissolved in an organic solvent, and is thereafter acted on by concentrated sulfuric acid, chlorosulfuric acid, fuming sulfuric acid, sulfur trioxide or the like to convert hydrogen atoms to sulfo groups.

As the precursors of the segments having substantially no ion exchange group, a compound represented by the following formula (3-h) is preferably used. The compound represented by the following formula (3-h) preferably includes the structural unit represented by the formula (1) and/or the structural unit represented by the formula (3). Further, the ion exchange capacity is preferably 0.5 meq/g or less. 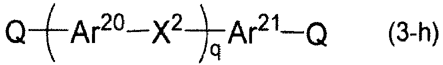 (wherein Ar²⁰ and Ar²¹ each independently represent a divalent aromatic group, and the divalent aromatic group may have at least one group selected from the group consisting of a fluorine atom, an alkyl group having 1 to 20 carbon atoms, which may have a substituent, an alkoxy group having 1 to 20 carbon atoms, which may have a substituent, an aryl group having 6 to 20 carbon atoms, which may have a substituent, an aryloxy group having 6 to 20 carbon atoms, which may have a substituent, an acyl group having 2 to 20 carbon atoms, which may have a substituent, an arylsulfonyl group having 6 to 20 carbon atoms, which may have a substituent, an alkylsulfonyl group having 1 to 20 carbon atoms, which may have a substituent, and a cyano group as a substituent. Here, q represents an integer of 1 or more. When q is 2 or more, Ar²⁰'s present may be the same as or different from each other. Q and X² have the same definitions as described above).

Here, examples of Ar²⁰ and Ar²¹ include the same groups of the specific examples of Ar². Further, examples of the substituent which may be included in Ar²⁰ and Ar²¹ include the same ones of the specific examples of the substituent which may be included in Ar².

Examples of the compound represented by the formula (3-h) include the compounds of the following formulae (da) to (dp). Among these, (da), (de), (df), (di), (dk), (dn), (do), (dp), (dq), (dr), and (ds) are preferred. Examples of the more preferable precursor include (da), (de), (df), (dk), (dp), (dr), and (ds). These precursors are preferable since they easily secure high solvent-solubility of the polymer electrolyte including the polyarylene-based copolymer of the present invention, and easily provide the obtained polymer electrolyte with heat resistance and durability. Further, these precursors are preferable since they can be synthesized using starting materials that are industrially readily available.

In the following formula, i represents a molar compositional ratio, and i is preferably 0.5 or more. Further, i is preferably 0.90 or less, more preferably 0.85 or less, still more preferably 0.70 or less, and most preferably 0.5. Further, q equals an integer of 0 or more. In order to improve the shape stability when making a polymer electrolyte membrane, q is preferably 2 or more, and more preferably 3 or more. Further, in order to increase the proton conductivity, q is preferably 45 or less, more preferably 30 or less, still more preferably 10 or less, and particularly preferably 5 or less.

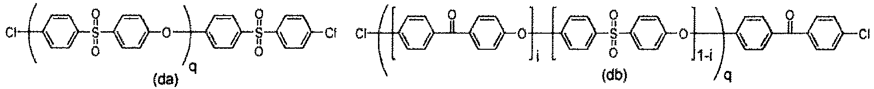

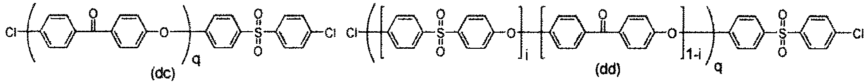

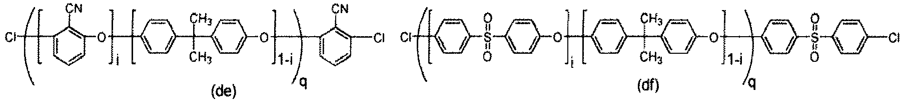

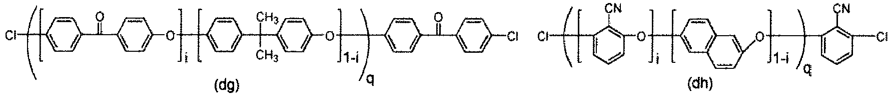

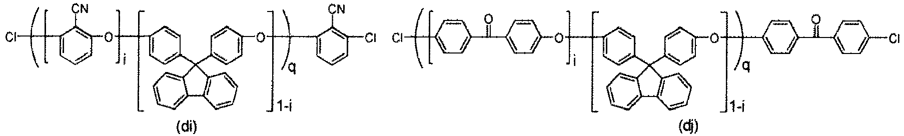

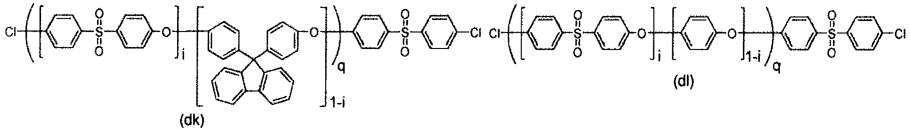

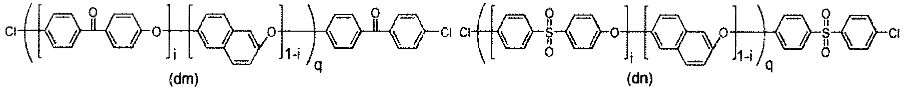

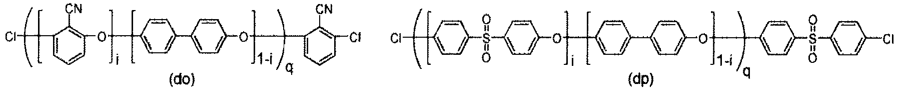

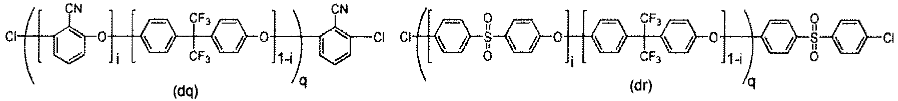

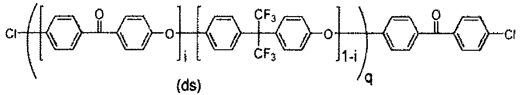

In the present invention, the polystyrene-equivalent weight-average molecular weight of the precursors of the segments having substantially no ion exchange group is preferably from 1,000 to 35,000, more preferably from 1,500 to 25,000, still more preferably from 2,000 to 20,000, even still preferably from 2,500 to 10,000, and particularly preferably from 3,000 to 6,000. When the polystyrene-equivalent weight-average molecular weight is more than 35,000, the proton conductivity tends to decrease. The weight-average molecular weight is measured by means of gel permeation chromatography (GPC).

Furthermore, in the present invention, the absolute molecular weight of the precursors of the segments having substantially no ion exchange group is preferably from 250 to 10,000, more preferably from 400 to 6,000, still more preferably from 600 to 3,000, and particularly preferably from 1000 to 2000. When the absolute molecular weight is more than 10,000, the proton conductivity tends to decrease.

Next, the polymerization reaction (condensation reaction) for production of the polyarylene-based copolymer of the present invention will be described. Further, in descriptions of the production methods described below, the polyarylene-based copolymer according to the present invention and a polyarylene-based copolymer precursor which can produce the polyarylene-based copolymer according to the present invention are collectively referred to as "polymers and the like" in some cases.

The polymerization by condensation reaction is carried out under the co-existence of a zero-valent transition metal complex.

The zero-valent transition metal complex is a complex in which a halogen or a ligand described later is coordinated to a transition metal, and is preferably one having at least one ligand described later. As the zero-valent transition metal complex, either of a commercially available product and a separately synthesized one may be used.

An example of the synthesis method of a zero-valent transition metal complex includes known methods such as a method in which a transition metal salt or a transition metal oxide and a ligand are reacted, and a method in which a transition metal compound is adjusted to be zero-valent with a reducing agent such as zinc and magnesium. A zero-valent transition metal complex synthesized may be used after taken out, or may be used in situ without being taken out.

Examples of the ligand include acetate, acetyl acetonato, 2,2'-bipyridyl, 1,10-phenanthroline, methylenebisoxazoline, N,N,N',N'-tetramethylethylenediamine, triphenylphosphine, tritolylphosphine, tributylphosphine, triphenoxyphosphine, 1,2-bisdiphenylphosphinoethane, and 1,3-bisdiphenylphosphinopropane.

Examples of the zero-valent transition metal complex include zero-valent nickel complexes, zero-valent palladium complexes, zero-valent platinum complexes and zero-valent copper complexes. Among these transition metal complexes, zero-valent nickel complexes and zero-valent palladium complexes are preferably used, and zero-valent nickel complexes are more preferably used.

Examples of the zero-valent nickel complexes include bis(1,5-cyclooctadiene)nickel (0), (ethylene)bis (triphenylphosphine)nickel (0) and tetrakis(triphenylphosphine)nickel. Among these, bis(1,5-cyclooctadiene)nickel (0) is preferably used from the viewpoint of the reactivity, the yield of polymers obtained and the high polymerization of polymers obtained.

Example of the zero-valent palladium complex include tetrakis(triphenylphosphine)palladium (0).

These zero-valent transition metal complexes may be synthesized as described above, or commercially available ones may be used.

When a zero-valent transition metal complex is made to be generated from a transition metal compound by a reducing agent, as a transition metal compound to be used, compounds of a zero-valent transition metal may be used, but compounds of a divalent transition metal are preferably used. Particularly divalent nickel compounds and divalent palladium compounds are preferable. The divalent nickel compounds include nickel chloride, nickel bromide, nickel iodide, nickel acetate, nickel acetyl acetonato, bis(triphenylphosphine)nickel chloride, bis(triphenylphosphine)nickel bromide and bis(triphenylphosphine)nickel iodide. Divalent palladium compounds include palladium chloride, palladium bromide, palladium iodide, and palladium acetate.

Examples of the reducing agent include zinc, magnesium, sodium hydride, hydrazine and derivatives thereof, and lithium aluminum hydride. As required, iodine compounds such as ammonium iodide, trimethylammonium iodide, triethylammonium iodide, lithium iodide, sodium iodide, and potassium iodide can be used concurrently.

In the condensation reaction using the transition metal complexes described above, a compound to become a ligand of a zero-valent transition metal complex used is preferably added from the viewpoint of an improvement in the yield of polymers obtained. The compounds added may be the same as or different from the ligand of the zero-valent transition metal complex used.

Examples of the compound to become a ligand include the compounds described before as examples of ligands, and are preferably triphenylphosphine and 2,2'-bipyridyl from the viewpoint of the versatility, the economic efficiency, the reactivity, the yield of polymers obtained and the high polymerization of polymers obtained. Particularly use of 2,2'-bipyridyl is particularly advantageous from the viewpoint of an improvement in the yield of polymers and the high polymerization.

The amount of a ligand added is usually about 0.2 to 10 mol-times, and preferably about 1 to 5 mol-times, based on a transition metal atom in a zero-valent transition metal complex.

The amount of a zero-valent transition metal complex used is 0.1 mol-times or more to the total molar amount of the monomers and the precursors involved in the condensation reaction. Since the use of too small an amount thereof is likely to make the molecular weight of the resulting polymer or the like low, the amount used of the zero-valent transition metal complex is preferably 1.5 mol-times or more, more preferably 1.8 mol-times or more, and still more preferably 2.1 mol-times or more. On the other hand, the upper limit of the amount used is not particularly limited, but since the use of too large an amount thereof brings about complexities in post-treatments in some cases, the amount used is preferably 5.0 mol-times or less.

Further, in the case of synthesizing a zero-valent transition metal complex from a transition metal compound by using a reducing agent, it suffices if the amounts used and the like of the transition metal compound and the reducing agent are set so that the zero-valent transition metal complex prepared is in the above-mentioned range, and it suffices if the amount of the transition metal compound is, for example, 0.01 mol-times or more, and preferably 0.03 mol-times or more, to the total amount of all monomers. The upper limit of the amount used thereof is not limited, but since too large an amount used thereof is likely to bring about complexities in post-treatments, the amount used is preferably 5.0 mol-times or less. It suffices if the amount of a reducing agent used is, for example, 0.5 mol-times or more, and preferably 1.0 mol-time or more, to the total amount of all monomers. The upper limit of the amount used thereof is not limited, but since too large an amount used thereof is likely to bring about complexities in post-treatments, the amount used is preferably 10 mol-times or less.

Furthermore, the reaction temperature for the condensation reaction is usually about 0°C to 200°C, and preferably about 10°C to 100°C. The reaction time is usually about 0.5 to 48 hours.

A method for mixing a zero-valent transition metal complex, and a monomer represented by the formula (4-h) and/or a monomer represented by the formula (4-i) and the precursors of the segments having substantially no ion exchange group including the structural unit represented by the formula (1), which are used in production of polymers, may be a method in which one thereof is added to the other, or a method in which both are simultaneously added to a reaction vessel. The addition thereof may be addition at a stroke, but is preferably addition in little by little in consideration of heat generation, and is preferably in the presence of a solvent, and a suitable solvent in this case will be described later.

The condensation reaction is carried out usually in the presence of a solvent. Examples of such a solvent include aprotic polar solvents such as N,N-dimethylformamide (DMF), N,N-dimethyl acetamide (DMAc), N-methylpyrrolidone (NMP), dimethyl sulfoxide (DMSO) and hexamethylphosphoric triamide; aromatic hydrocarbon-based solvents such as toluene, xylene, mesitylene, benzene and n-butylbenzene; ether-based solvents such as tetrahydrofuran, 1,4-dioxane, dibutyl ether and tert-butyl methyl ether; ester-based solvents such as ethyl acetate, butyl acetate and methyl benzoate; and alkyl halide-based solvents such as chloroform and dichloroethane. Notes in the parentheses indicate abbreviations of solvents, and in notes described later, these abbreviations may be used in some cases.

In order to make the molecular weight of prepared polymers higher, since use of a solvent capable of sufficiently dissolving the polymers is desirable, use of tetrahydrofuran, 1,4-dioxane, DMF, DMAc, NMP, DMSO, or toluene, which is a good solvent to the polymers prepared, is preferable. These may be used as a mixture of two or more. Above all, at least one solvent selected from the group consisting of DMF, DMAc, NMP and DMSO, or a mixture of two or more solvents selected therefrom is preferably used.

The amount of a solvent is not particularly limited, but since too low a concentration thereof can hardly recover polymers prepared in some cases, and since too high a concentration thereof brings about a difficulty in agitation in some cases, the amount of a solvent to be used is determined so that the weight proportion of the solvent is preferably 1 weight-times to 999 weight-times, and more preferably 3 weight-times to 199 weight-times, with respect to the solvent and the monomers used in production of polymers (monomers selected from the monomers and the precursors of the segments having substantially no ion exchange group including the structural unit represented by the formula (1), which are used in production of polymers.

Polymers are thus obtained, but the prepared polymers can be taken out from reaction mixtures by conventional methods. For example, the polymers are separated by adding a poor solvent, and target materials can be taken out by filtration or the like.

In addition, as required, the materials may be purified by an ordinary purification method such as water washing or the reprecipitation using a good solvent and a poor solvent.

When the ion exchange group of the resulting polymer has the form of a salt, in order to use the polymer as a member for a fuel cell, the ion exchange group is preferably made in a form of a free acid, and the conversion to the form of a free acid can be carried out by washing with a common acidic solution. Examples of an acid to be used include hydrochloric acid, sulfuric acid, and nitric acid, and are preferably dilute hydrochloric acid and dilute sulfuric acid.

Furthermore, when a prepolymer having an ion exchange precursor group protected is obtained, in order to use the prepolymer as a member for a fuel cell, the protected ion exchange precursor group needs to be converted into an ion exchange group in a form of a free acid.

For such a conversion to an ion exchange group in a form of a free acid of the ion exchange precursor group in the form where the ion exchange group is protected with formation of an ester or an amide, the hydrolysis with an acid or a base, or a deprotection reaction by a halide can be used. In the case of using a base, washing with an acidic solution as described above allows conversion into an ion exchange group in the form of a free acid. Examples of the acid or base to be used include hydrochloric acid, sulfuric acid, nitric acid, sodium hydroxide and potassium hydroxide. Examples of the halide to be used include lithium bromide, sodium iodide, tetramethylammonium chloride, and tetrabutylammonium bromide, and are preferably lithium bromide and tetrabutylammonium bromide. The conversion rate to an ion exchange group can be quantitatively determined from the characteristic peaks of a sulfonate ester or a sulfonamide in an infrared absorption spectrum and a nuclear magnetic resonance spectrum.

The introduction amount of the ion exchange groups of a polyarylene-based copolymer as a whole is, in terms of the ion exchange capacity, preferably 3.0 meq/g or more, more preferably 3.5 meq/g or more, still more preferably 4.0 meq/g or more, and even still more preferably 4.5 meq/g or more. Further, the incorporation amount is preferably 7.0 meq/g or less, more preferably 5.5 meq/g or less, and still more preferably 5.0 meq/g or less.

If the ion exchange capacity indicating the amount of ion exchange groups introduced is 3.0 meq/g or more, the proton conductivity becomes higher, and a function as a polymer electrolyte of a fuel cell is excellent, which is preferable. On the other hand, if the ion exchange capacity indicating the amount of ion exchange groups introduced is 7.0 meq/g or less, the water resistance becomes better, which is preferable. The ion exchange capacity is measured by acid-base titration.

Furthermore, for the polyarylene-based copolymer of the present invention, the polystyrene-equivalent weight-average molecular weight is preferably from 200,000 to 2,000,000, more preferably from 250,000 to 1,500,000, and particularly preferably from 300,000 to 1,000,000. The weight-average molecular weight is measured by means of gel permeation chromatography (GPC).

Moreover, the polyarylene-based copolymer of the present invention may be a random copolymer including monomers having two or more different properties (including macro monomers) or a block copolymer. Among these, the polyarylene-based copolymer of the present invention preferably has a structure of a block polymer capable of forming a microphase separation structure by association of copolymer main chains having different properties at conversion into a membrane form as described later. The polymer electrolyte membrane having a microphase separation structure is preferable since it is excellent in proton conductivity and water resistance.

The polyarylene-based copolymer of the present invention can suitably be used as a member for a fuel cell.

The polyarylene-based copolymer of the present invention is preferably used as a polymer electrolyte of electrochemical devices such as fuel cells, and particularly preferably used as a polymer electrolyte membrane. Further, in descriptions hereinafter, mainly the case of the polymer electrolyte membrane described above will be described.

In this case, the polymer electrolyte of the present invention is converted into a form of a membrane. This membrane forming method is not particularly limited, but a membrane formation method for forming a membrane from a solution state (solution cast method) is preferable. The solution cast method is a method so far broadly used in the field concerned as production of a polymer electrolyte membrane, and industrially particularly useful.

Specifically, a membrane is prepared by dissolving the polymer electrolyte of the present invention in an appropriate solvent to prepare a polymer electrolyte solution, which is then cast on a support base material, and the solvent removed. Examples of such a support base material include glass plates, and plastic films such as polyethylene (PE), polypropylene (PP), polyethylene terephthalate (PET), polyethylenenaphthalate (PEN), and polyimide (PI).

The solvent used in the solution cast method (cast solvent) is not particularly limited as long as the solvent can sufficiently dissolve the polymer electrolyte of the present invention, and can thereafter be removed, and suitably used are aprotic polar solvents such as NMP, DMAc, DMF, 1,3-dimethyl-2-imidazolidinone (DMI), and DMSO; chlorine-based solvents such as dichloromethane, chloroform, 1,2-dichloroethane, chlorobenzene, and dichlorobenzene; alcohols such as methanol, ethanol, and propanol; and alkylene glycol monoalkyl ethers such as ethylene glycol monomethyl ether, ethylene glycol monoethyl ether, propylene glycol monomethyl ether, and propylene glycol monoethyl ether. These may be used singly, but as required, as a mixture of two or more thereof. Among them, NMP, DMAc, DMF, and DMI are preferable because these can provide a high solubility of the polymer electrolyte of the present invention, and a polymer electrolyte membrane having a high water resistance, and NMP is more preferably used.

The thickness of a polymer electrolyte membrane thus obtained is not particularly limited, but is preferably from 5 µm to 300 µm in the practical range as a polymer electrolyte membrane (diaphragm) for a fuel cell. A membrane having a membrane thickness of 5 µm or more has an excellent practical strength, which is preferable; and a membrane of 300 µm or less is likely to have a low membrane resistance itself, which is preferable. The membrane thickness can be controlled by the weight concentration of the solution described above and the application thickness of the applied membrane on a support base material.

Moreover, in order to improve various physical properties of a membrane, a polymer electrolyte may be prepared by adding additives such as a plasticizer, a stabilizer, and a release agent as used in common polymers to the polyarylene-based copolymer of the present invention. Alternatively, a polymer electrolyte can be prepared by composite alloying another polymer with the polyarylene-based copolymer of the present invention by a method in which the polymers are mixed in the same solvent and concurrently cast. When a polymer electrolyte is prepared by combining the polyarylene-based copolymer of the present invention with additives and/or another polymer, the types and the amounts used of the additives and/or other polymers are determined such that desired characteristics can be obtained when the polymer electrolyte is applied to a member for a fuel cell.

Furthermore, in order to facilitate water control in fuel cell applications, also addition of inorganic or organic microparticles as a water retention agent is known. Any of these known methods can be used unless being contrary to the object of the present invention. Further, in order to improve the mechanical strength or the like, a polymer electrolyte membrane thus obtained may be subjected to a treatment such as irradiation of an electron beam, atomic radiation, or the like.

In addition, in order to improve the strength, flexibility and durability of a polymer electrolyte membrane using the polymer electrolyte of the present invention, a polymer electrolyte comprising the polyarylene-based copolymer of the present invention may be impregnated and composited in a porous base material to make a polymer electrolyte composite membrane (hereinafter, referred to as a "composite membrane"). As the compositing method, known methods can be used.

The porous base material is not particularly limited as long as it satisfies the above-mentioned use object, and examples thereof include porous membranes, woven fabrics, and non-woven fabrics, and any of the porous base materials can be used not depending on the shapes and the materials. The material of the porous base material is, in consideration of the viewpoint of heat resistance and a reinforcement effect of physical strength, preferably an aliphatic polymer or an aromatic polymer.

In the case of using a composite membrane including the polymer electrolyte of the present invention and a porous base material, the membrane thickness of the porous base material is preferably from 1 µm to 100 µm, more preferably from 3 µm to 30 µm, and particularly preferably from 5 µm to 20 µm. The pore diameter of the porous base material is preferably from 0.01 to 100 µm, and more preferably from 0.02 µm to 10 µm. The porosity of the porous base material is preferably from 20% to 98%, and more preferably from 40% to 95%.

If the membrane thickness of the porous base material is 1 µm or more, an effect on reinforcement of the strength after the compositing, and a reinforcing effect of imparting flexibility and durability are better, and gas leakage (cross leak) hardly occurs. If the membrane thickness is 100 µm or less, the electric resistance becomes lower to thereby make an obtained composite membrane a better one as a polymer electrolyte membrane for a fuel cell. If the pore diameter is 0.01 µm or more, filling of the polymer of the present invention becomes easier; and if the pore diameter is 100 µm or less, a reinforcing effect becomes larger. If the porosity is 20% or more, the resistance as a polymer electrolyte membrane becomes smaller; and if the porosity is 98% or less, the strength of a porous base material itself becomes larger to thereby further improve the reinforcing effect, which is preferable.

Furthermore, a composite membrane including the polymer electrolyte of the present invention and a porous base material, and a polymer electrolyte membrane including the polymer electrolyte of the present invention are laminated, and the laminated membrane may also be used as a proton conductive membrane.

Next, the fuel cell of the present invention will be described.

The membrane electrode assembly of the present invention (hereinafter, referred to as "MEA" in some cases) to become a basic unit of a fuel cell can be prepared by using at least one of the polymer electrolyte membrane of the present invention, the polymer electrolyte composite membrane of the present invention, and a catalyst composition including the polymer electrolyte of the present invention and a catalyst component.

Here, the catalyst component is not particularly limited as long as it can activate the redox reaction between hydrogen and oxygen, and other known ones can be used, but microparticles of platinum or a platinum alloy are preferably used as the catalyst component. The microparticles of platinum or a platinum alloy are supported for use on particulate or fibrous carbon such as activated carbon or graphite in many cases.

A catalyst layer can be obtained by applying and drying a catalyst composition obtained by mixing platinum-based or a platinum-based alloy supported on carbon (carbon-supported catalyst) together with a solution of the polymer electrolyte of the present invention and/or an alcohol solution of a perfluoroalkylsulfonic acid resin as a polymer electrolyte and making the mixture in the form of a paste, on a gas diffusion layer and/or a polymer electrolyte membrane and/or a polymer electrolyte composite membrane. Specific methods usable are known methods such as a method described in J. Electrochem. Soc.: Electrochemical Science and Technology, 1988, 135(9), 2209. An MEA can be obtained by forming catalyst layers on both surfaces of a polymer electrolyte membrane in such a way. Further, in the production of the MEA, when a catalyst layer is formed on a base material to become a gas diffusion layer, an obtained MEA is in a form of a membrane-electrode-gas diffusion layer assembly comprising both gas diffusion layers and catalyst layers on both surfaces of the polymer electrolyte membrane. Further, when a catalyst composition in the form of a paste is applied on a polymer electrolyte membrane to form a catalyst layer on the polymer electrolyte membrane, a membrane-electrode-gas diffusion layer assembly can be obtained by further forming a gas diffusion layer on the obtained catalyst layer.

A known material can be used as a gas diffusion layer, but porous carbon fabric, carbon non-woven fabric, or carbon paper is preferable in order to efficiently transport a raw material gas to a catalyst.

Fuel cells having the MEA thus prepared can be used in a type using hydrogen gas or a reformed hydrogen gas as a fuel as well as in various types using methanol.

### EXAMPLES

Hereinbelow, the present invention will be described by way of Examples.

### Measurement of Molecular Weight:

The polystyrene equivalent number-average molecular weight (Mn) and the polystyrene equivalent weight-average molecular weight (Mw) were measured by means of gel permeation chromatography (GPC) under the conditions described below. Further, as the analysis conditions of GPC, the conditions used to measure the molecular weight using the following conditions are noted.

### Conditions

GPC measurement apparatus: Prominence GPC Systems, manufactured by Shimadzu Corp.
Column: TSKgel GMH_{HR}-M, manufactured by Tosoh Corp.
Column temperature: 40°C
Mobile phase solvent: DMF (containing 10 mmol/dm³ of LiBr)
Solvent flow rate: 0.5 ml/min
Detection: differential refractive index
Measurement of Ion exchange Capacity (IEC):

A polymer to be provided for the measurement was formed as a membrane by a solution cast method to obtain a polymer membrane, and the obtained polymer membrane was cut in a suitable weight. The dry weight of the cut polymer membrane was measured by using a Halogen Moisture Analyzer at a heating temperature of 110°C. Then, the polymer membrane thus dried was immersed in 5 ml of 0.1 mol/l sodium hydroxide aqueous solution, and thereafter, 50 ml of ion exchange water was further added thereto, and allowed to be left for 2 hours. Thereafter, 0.1 mol/l hydrochloric acid was gradually added to the solution in which the polymer membrane was immersed to titrate the solution to determine a point of neutralization, and the ion exchange capacity (unit: meq/g) of the polymer was calculated from the dry weight of the cut polymer membrane and the amount of hydrochloric acid used for the neutralization.

### Measurement of Proton Conductivity:

The proton conductivity was measured by an alternating-current method. Two measuring cells were prepared each in which a carbon electrode was pasted on one surface of a silicon rubber (thickness: 200 µm) having a 1 cm² opening and arranged so that the carbon electrodes are opposed to each other, and terminals of an impedance measuring device were directly connected to the two cells described above.

Then, between the two measuring cells, the polymer electrolyte membrane, in which ion exchange groups obtained by the method described above were converted into a proton type, was set, and the resistance value between the two measuring cells at 23°C was measured.

Thereafter, the polymer electrolyte membrane was removed, and the resistance value was again measured. The membrane resistance in the membrane thickness direction of the polymer electrolyte membrane was calculated based on the difference between two resistance values obtained for the state of having a polymer electrolyte membrane and the state of having no polymer electrolyte membrane. The proton conductivity in the membrane thickness direction of the polymer electrolyte membrane was calculated from the value of the obtained membrane resistance and the membrane thickness. As a solution to be brought into contact with both sides of the polymer electrolyte membrane, 1 mol/l dilute sulfuric acid was used.

### Fenton Test:

(Step 1) 4 mg of a polymer electrolyte membrane to be provided for measurement was immersed in 2 ml of an aqueous solution including iron ions using iron (II) chloride for 1 hour, and then the polymer electrolyte membrane was left to stand at a pressure of I hPa or less for about 1 hour. The polymer electrolyte membrane was dried until the moisture amount reached 10 weight-times with respect to the polymer electrolyte membrane, and thus, the amount of the iron ions present in the polymer electrolyte membrane was adjusted to about 20 with respect to 100 sulfo groups. When the concentration of the iron ions in the polymer electrolyte membrane is adjusted, such adjustment was carried out by adjusting the concentration of the aqueous solution including iron ions.
(Step 2) The polymer electrolyte membrane after the step 1 was immersed in aqueous 0.3%-by-weight hydrogen peroxide, and the polymer electrolyte membrane was left to stand at 50°C under an atmospheric pressure for about 30 minutes and dried to a moisture amount of 10 weight.

The operation in the (Step 2) was repeatedly carried out three times, and then the polystyrene-equivalent weight-average molecular weight of the segments having an ion exchange group was measured.

### [Measurement of Amount of Iron in Polymer Electrolyte Membrane]

About the amount of iron adsorbed on the polymer electrolyte membrane, measurements of the solution of iron (II) chloride by inductive coupled plasma light emission spectrometric apparatus (ICP light emission) under the conditions described below, and from the amount of Fe in the solution of iron (II) chloride in before and after immersion, the amount of Fe adsorbed on the polymer electrolyte membrane was calculated.

### (Conditions for Measurement of ICP Light Emission)

Measurement apparatus: SPS 3000, manufactured by SII Nanotechnology Inc.
Measurement wavelength: 238.28 nm

### [Measurement of Polystyrene-equivalent Weight-Average Molecular Weight of Segments Having Ion Exchange Group]

The polystyrene-equivalent weight-average molecular weight of the segments having an ion exchange group (MW of the segments having an ion exchange group) was determined by the following method.

### (Condition 1)

Into 4 mg of the polymer electrolyte membrane, 8 ml of DMSO and 10 µl of a methanol solution including 25% by weight of tetramethylammonium hydroxide were mixed, and the resulting mixture was heated at 100°C for 2 hours. The molecular weight of the obtained polymer electrolyte solution was determined by measurement by means of GPC. Further, the analysis conditions for GPC are the same as for the measurement of the molecular weight.

### (Condition 2)

Into I mg of the polymer electrolyte membrane, 2 ml of DMSO and 15 µl of a methanol solution of 25% by weight of tetramethylammonium hydroxide were mixed, and the resulting mixture was heated at 100°C for 2 hours. The molecular weight of the obtained polymer electrolyte solution was determined by measurement by means of GPC. Further, the analysis conditions for GPC are the same as for the measurement of the molecular weight.

[MW Maintenance Rate of Segments Having Ion Exchange Group in Fenton Test]

The MW maintenance rate of the segments having an ion exchange group in the Fenton test is determined by the following formula.

MW maintenance rate of Segments having an ion exchange group in Fenton test =(MW of segments having an ion exchange group after Fenton test/MW of segments having an ion exchange group)×100

### <Synthesis Example 1>

Di(2,2-dimethylpropyl) 4,4'-dichlorobiphenyl-2,2'-disulfonate represented by the following structural formula (A) was synthesized by the method described in Example 1 of JP-A-2007-270118.

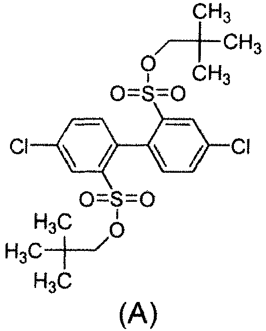

### <Example 1>

14.3 g (57.0 mmol) of 4,4ʹ-dihydroxydiphenylsulfone, 11.8 g (85.5 mmol) of potassium carbonate, 103 g of N-methylpyrrolidone, and 51 g of toluene were added to a flask equipped with an azeotropic distillation apparatus under a nitrogen atmosphere. The mixture was heated at a bath temperature of 160°C for 2.5 hours under the toluene reflux to azeotropically dehydrate moisture in the system. After water generated and toluene were distilled out, the obtained mixture was left to be cooled to room temperature, and 20.0 g (69.7 mmol) of 4,4'-dichlorodiphenylsulfone was added thereto to obtain a mixture. The bath temperature was raised to 180°C and the mixture was stirred for 7 hours while maintaining the temperature. After leaving to cool, the reaction solution was added to a mixed solution of 1030 g of methanol and 202 g of 35%-by-weight hydrochloric acid, and the deposited precipitate was collected by filtration, washed with ion exchange water until the filtrate became neutral, and then dried. The obtained crude product was dissolved in 100 g of N-methylpyrrolidone, and the obtained solution was added to a mixed solution of 1000 g of methanol and 200 g of 35%-by-weight hydrochloric acid, and the deposited precipitate was collected by filtration, washed with ion exchange water until the filtrate became neutral, and then dried to obtain 28.4 g of precursors from which the segments having substantially no ion exchange group are derived, represented by the following formula (B).

GPC molecular weight: Mn=4800, MW=8500 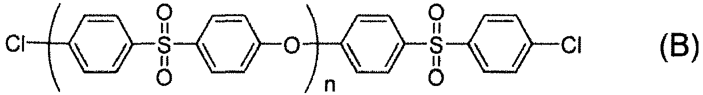 (wherein n represents the number of repeating units).

Next, 1.69 g (7.74 mmol) of anhydrous nickel bromide and 200 g of N-methylpyrrolidone were added to a flask under an argon atmosphere, and the resulting mixture was stirred at a bath temperature of 70°C. After confirming that the anhydrous nickel bromide was dissolved, the bath temperature was lowered to 50°C and 1.45 g (9.28 mmol) of 2,2'-bipyridyl was added thereto to prepare a nickel-containing solution.

3.35 g of the precursors from which the segments having substantially no ion exchange group are derived, represented by the formula (B), and 240 g of N-methylpyrrolidone were added to a flask under an argon atmosphere, and the temperature was adjusted to 50°C. To the obtained solution, 3.04 g (46.4 mmol) of zinc powder, 0.855 g of a mixed solution of 1 part by weight of methanesulfonic acid and 9 parts by weight of N-methylpyrrolidone, and 20.0 g (45.9 mmol) of di(2,2-dimethylpropyl) 4,4'-dichlorobiphenyl-2,2'-disulfonate were added, and the resulting mixture was stirred at 50°C for 30 minutes. The nickel-containing solution was poured thereinto, and a polymerization reaction was carried out at 50°C for 7.5 hours to obtain a black polymerization solution.

The obtained polymerization solution was poured into 2800 g of 13%-by-weight hydrochloric acid, and the mixture was stirred at room temperature for 30 minutes. The precipitate generated was collected by filtration, and then added to 2800 g of 13%-by-weight hydrochloric acid, stirred at room temperature for 30 minutes, and then filtered. The collected solid was washed with ion exchange water until the pH of the filtrate exceeded 4. To the obtained crude polymer were added 600 g of ion exchange water and 700 g of methanol, and the mixture was heated while stirring at a bath temperature of 90°C for I hour. The crude polymer was filtered and dried to obtain 20.4 g of a polymer (C) having sulfonic acid precursor groups ((2,2-dimethylpropyl) sulfonate groups).

Then, the sulfonic acid precursor groups were converted into sulfo groups as follows.

19.7 g of the polymer (C) having sulfonic acid precursor groups thus obtained above, 44.2 g of ion exchange water, 13.3 g (153 mmol) of anhydrous lithium bromide, and 295 g of N-methylpyrrolidone were put into a flask, and the mixture was heated while stirring at a bath temperature of 126°C for 12 hours to obtain a polymer solution. The obtained polymer solution was put into 2750 g of 13%-by-weight hydrochloric acid, and the mixture was stirred for 1 hour. The precipitated crude polymer was collected by filtration, and the residue was washed three times with 983 g of a mixed solution of 10 parts by weight of methanol and 10 parts by weight of 35% hydrochloric acid. Thereafter, the crude polymer was washed with ion exchange water until the pH of the filtrate exceeded 4. Subsequently, to the obtained polymer was added a large amount of ion exchange water, the temperature was raised to 90°C or higher and maintained for about 10 minutes, and the mixture was filtered. This washing operation repeated twice. The obtained polymer was dried to obtain 12.2 g of a polymer (D) including the repeating units represented by the following formula: 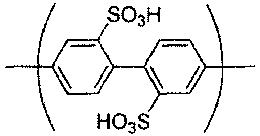 and the segments represented by the following formula: 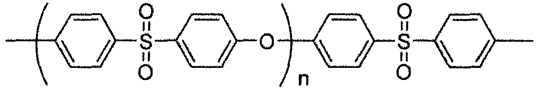 (wherein n represents the number of repeating units).

1.0 g of the obtained polymer (D) was dissolved in 13 g of N-methylpyrrolidone to prepare a polymer solution. The obtained polymer solution was cast-coated on a PET film, dried at 80°C under a normal pressure for 2 hours to remove the solvent, and then treated with 13%-by-weight hydrochloric acid and washed with ion exchange water to prepare a polymer electrolyte membrane having a membrane thickness of about 20 µm.
MW of segments having an ion exchange group (Condition 1): 113000
MW of precursors from which the segments having substantially no ion exchange group are derived: 8500
MW of copolymer: 400000
IEC (meq/g): 4.5
Proton conductivity (S/cm): 0.17
Concentration of aqueous solution including iron ions: 1.5 mmol/l
MW of segments having an ion exchange group after Fenton test (Condition 1): 82000
MW maintenance rate of segments having an ion exchange group in Fenton test: 73%

### <Example 2>

10.2 g (54.7 mmol) of 4,4'-dihydroxy-1,1'-biphenyl, 8.32 g (60.2 mmol) of potassium carbonate, 96 g of N,N-dimethyl acetamide, and 50 g of toluene were added to a flask equipped with an azeotropic distillation apparatus under a nitrogen atmosphere. The mixture was heated at a bath temperature of 155°C for 2.5 hours under the toluene reflux to azeotropically dehydrate moisture in the system. After water generated and toluene were distilled out, the obtained mixture was left to be cooled to room temperature, and 22.0 g (76.6 mmol) of 4,4'-dichlorodiphenylsulfone was added thereto to obtain a mixture. The bath temperature was raised to 160°C and the mixture was stirred for 14 hours while maintaining the temperature. After leaving to cool, the reaction solution was added to a mixed solution of 1000 g of methanol and 200 g of 35%-by-weight hydrochloric acid, and the deposited precipitate was collected by filtration, washed with ion exchange water until the filtrate became neutral, and then dried. 27.2 g of the obtained crude product was dissolved in 97 g of N,N-dimethylacetamide, the insoluble materials were removed by filtration, the filtrate was added to a mixed solution of 1100 g of methanol and 100 g of 35%-by-weight hydrochloric acid, and the deposited precipitate was collected by filtration, washed with ion exchange water until the filtrate became neutral, and then dried to obtain 25.9 g of precursors from which the segments having substantially no ion exchange group are derived, represented by the following formula (E).

GPC molecular weight: Mn=1700, MW=3200 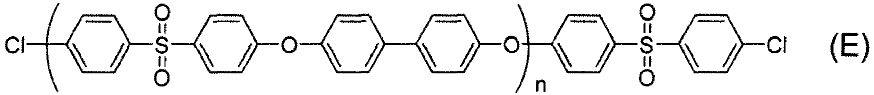 (wherein n represents the number of repeating units).

Next, 2.12 g (9.71 mmol) of anhydrous nickel bromide and 96 g of N-methylpyrrolidone were added to a flask under an argon atmosphere, and the resulting mixture was stirred at a bath temperature of 70°C. After confirming that the anhydrous nickel bromide was dissolved, the bath temperature was lowered to 50°C and 1.82 g (11.7 mmol) of 2,2'-bipyridyl was added thereto to prepare a nickel-containing solution.

4.02 g of the precursors from which the segments having substantially no ion exchange group are derived, represented by the formula (E), and 384 g of N-methylpyrrolidone were added to a flask under an argon atmosphere, and the temperature was adjusted to 50°C. 3.81 g (58.2 mmol) of zinc powder, 1.05 g of a mixed solution of 1 part by weight of methanesulfonic acid and 9 parts by weight of N-methylpyrrolidone, and 24.0 g (45.9 mmol) of di(2,2-dimethylpropyl) 4,4'-dichlorobiphenyl-2,2'-disulfonate were added to the obtained solution, and the resulting mixture was stirred at 50°C for 30 minutes. The nickel-containing solution was poured thereinto, and a polymerization reaction was carried out at 50°C for 6 hours to obtain a black polymerization solution.

The obtained polymerization solution was poured into 3360 g of 13%-by-weight hydrochloric acid, and the mixture was stirred at room temperature for 30 minutes. The precipitate generated was collected by filtration, and then added to 3360 g of 13%-by-weight hydrochloric acid, stirred at room temperature for 30 minutes, and then filtered. The collected solid was washed with ion exchange water until the pH of the filtrate exceeded 4. To the obtained crude polymer were added 840 g of ion exchange water and 790 g of methanol, and the mixture was heated while stirring at a bath temperature of 90°C for I hour. The crude polymer was filtered and dried to obtain 23.9 g of a polymer (F) having sulfonic acid precursor groups ((2,2-dimethylpropyl) sulfonate groups).

Then, the sulfonic acid precursor groups were converted into sulfo-groups as follows.

23.9 g of the polymer (F) having sulfonic acid precursor groups thus obtained above, 47.8 g of ion exchange water, 15.9 g (183 mmol) of anhydrous lithium bromide, and 478 g of N-methylpyrrolidone were put into a flask, and the mixture was heated while stirring at a bath temperature of 126°C for 12 hours to obtain a polymer solution. The obtained polymer solution was put into 3340 g of 13%-by-weight hydrochloric acid, and the mixture was stirred for I hour. The precipitated crude polymer was collected by filtration, and the residue was washed three times with 2390 g of a mixed solution of 10 parts by weight of methanol and 10 parts by weight of 35% hydrochloric acid. Thereafter, the crude polymer was washed with ion exchange water until the pH of the filtrate exceeded 4. Subsequently, to the obtained polymer was added a large amount of ion exchange water, the temperature was raised to 90°C or higher and maintained for about 10 minutes, and the mixture was filtered. This washing operation repeated five times. The obtained polymer was dried to obtain 17.3 g of a polymer (G) including the repeating units represented by the following formula: 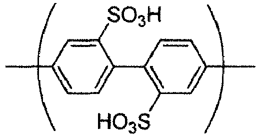 and the segments represented by the following formula: 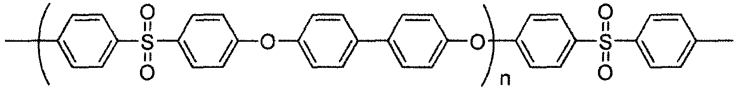 (wherein n represents the number of repeating units).

1.0 g of the obtained polymer (G) was dissolved in 16 g of N-methylpyrrolidone to prepare a polymer solution. The obtained polymer solution was cast-coated on a PET film, dried at 80°C under a normal pressure for 2 hours to remove the solvent, and then treated with 6%-by-weight hydrochloric acid and washed with ion exchange water to prepare a polymer electrolyte membrane having a membrane thickness of about 20 µm.
MW of segments having an ion exchange group (Condition 1): 71000
MW of precursors from which the segments having substantially no ion exchange group are derived: 3200
MW of copolymer: 680000
IEC (meq/g): 4.6
Proton conductivity (S/cm): 0.16
Concentration of aqueous solution including iron ions: 1.5 mmol/l
MW of segments having an ion exchange group after Fenton test (Condition 1): 59000
MW maintenance rate of segments having an ion exchange group in Fenton test: 83%

### <Example 3>

18.5 g (80.9 mmol) of 2,2-bis(4-hydroxyphenyl)propane, 12.3 g (89.0 mmol) of potassium carbonate, 102 g of N-methylpyrrolidone, and 51 g of toluene were added to a flask equipped with an azeotropic distillation apparatus under a nitrogen atmosphere. The toluene was heated at a bath temperature of 160°C for 2 hours under reflux to azeotropically dehydrate moisture in the system. After water generated and toluene were distilled out, 15.0 g (87.2 mmol) of 2,6-dichlorobenzonitrile was added thereto to obtain a mixture. The bath temperature was raised to 170°C and the mixture was stirred for 15 hours while maintaining the temperature. After leaving to cool, the reaction solution was added to a mixed solution of 1000 g of methanol and 200 g of 35%-by-weight hydrochloric acid, and the deposited precipitate was collected by filtration, washed with ion exchange water until the filtrate became neutral, and then dried. The obtained crude product was dissolved in 101 g of tetrahydrofuran, and added to a mixed solution of 1000 g of methanol and 50 g of 35%-by-weight hydrochloric acid, and the deposited precipitate was collected by filtration, washed with ion exchange water until the filtrate became neutral, washed with 1000 g of methanol, and then dried to obtain 25.4 g of precursors from which the segments having substantially no ion exchange group are derived, represented by the following formula (H).

GPC molecular weight: Mn=7800, MW=15900 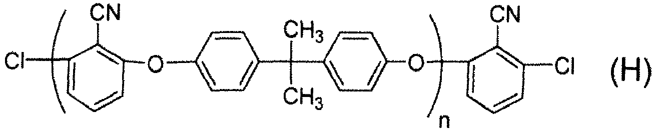 (wherein n represents the number of repeating units).

Next, 1.28 g (5.86 mmol) of anhydrous nickel bromide and 105 g of N-methylpyrrolidone were added to a flask under an argon atmosphere, and the resulting mixture was stirred at a bath temperature of 70°C. After confirming that the anhydrous nickel bromide was dissolved, the bath temperature was lowered to 50°C and 1.10 g (7.03 mmol) of 2,2'-bipyridyl was added thereto to prepare a nickel-containing solution.

2.51 g of the precursors from which the segments having substantially no ion exchange group are derived, represented by the formula (H), and 195 g of N-methylpyrrolidone were added to a flask under an argon atmosphere, and the temperature was adjusted to 50°C. 2.30 g (35.1 mmol) of zinc powder, 0.636 g of a mixed solution of 1 part by weight of methanesulfonic acid and 9 parts by weight of N-methylpyrrolidone, and 15.0 g (28.7 mmol) of di(2,2-dimethylpropyl) 4,4'-dichlorobiphenyl-2,2'-disulfonate were added to the obtained solution, and the resulting mixture was stirred at 50°C for 30 minutes. The nickel-containing solution was poured thereinto, and a polymerization reaction was carried out at 50°C for 6 hours to obtain a black polymerization solution.

The obtained polymerization solution was poured into 2100 g of 13%-by-weight hydrochloric acid, and the mixture was stirred at room temperature for 30 minutes. The precipitate generated was collected by filtration, and then added to 2100 g of 13%-by-weight hydrochloric acid, stirred at room temperature for 30 minutes, and then filtered. The collected solid was washed with ion exchange water until the pH of the filtrate exceeded 4. To the obtained crude polymer were added 525 g of ion exchange water and 495 g of methanol, and the mixture was heated while stirring at a bath temperature of 90°C for 1 hour. The crude polymer was filtered and dried to obtain 15.4 g of a polymer (I) having sulfonic acid precursor groups ((2,2-dimethylpropyl) sulfonate groups).

Then, the sulfonic acid precursor groups were converted into sulfo groups as follows.

15.4 g of the polymer (I) having sulfonic acid precursor groups thus obtained above, 38.4 g of ion exchange water, 9.95 g (115 mmol) of anhydrous lithium bromide, and 384 g of N-methylpyrrolidone were put into a flask, and the mixture was heated while stirring at a bath temperature of 126°C for 12 hours to obtain a polymer solution. The obtained polymer solution was put into 2150 g of 13%-by-weight hydrochloric acid, and the mixture was stirred for 1 hour. The precipitated crude polymer was collected by filtration, and the residue was washed three times with 1540 g of a mixed solution of 10 parts by weight of methanol and 10 parts by weight of 35% hydrochloric acid. Thereafter, the crude polymer was washed with ion exchange water until the pH of the filtrate exceeded 4. Subsequently, to the obtained polymer was added a large amount of ion exchange water, the temperature was raised to 90°C or higher and maintained for about 10 minutes, and the mixture was filtered. This washing operation repeated three times. The obtained polymer was dried to obtain 9.89 g of a polymer (J) including the repeating units represented by the following formula: 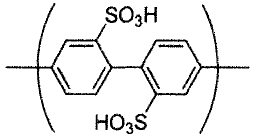 and the segments represented by the following formula: 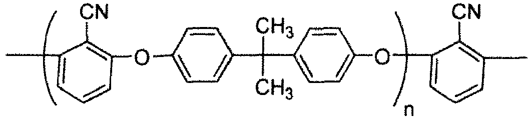 (wherein n represents the number of repeating units).

1.0 g of the obtained polymer (J) was dissolved in 16 g of N-methylpyrrolidone to prepare a polymer solution. The obtained polymer solution was cast-coated on a PET film, dried at 80°C under a normal pressure to remove the solvent, and then treated with 6%-by-weight hydrochloric acid and washed with ion exchange water to prepare a polymer electrolyte membrane having a membrane thickness of about 20 µm.
MW of segments having an ion exchange group (Condition 1): 213000
MW of precursors from which the segments having substantially no ion exchange group are derived: 15900
MW of copolymer: 765000
IEC (meq/g): 4.6
Proton conductivity (S/cm): 0.18
Concentration of aqueous solution including iron ions: 1.5 mmol/l
MW of segments having an ion exchange group after Fenton test (Condition 1): 136000
MW maintenance rate of segments having an ion exchange group in Fenton test: 64%

### <Example 4>

16.3 g (48.4 mmol) of 2,2-bis(4-hydroxyphenyl) hexafluoropropane, 7.35 g (53.2 mmol) of potassium carbonate, 100 g of N,N-dimethylformamide, and 50 g of toluene were added to a flask equipped with an azeotropic distillation apparatus under a nitrogen atmosphere. The mixture was heated at a bath temperature of 160°C for 3 hours under the toluene reflux to azeotropically dehydrate moisture in the system. After water generated and toluene were distilled out, 17.0 g (67.7 mmol) of 4,4'-dichlorobenzophenone was added thereto to obtain a mixture. The bath temperature was raised to 175°C and the mixture was stirred for 14 hours while maintaining the temperature. After leaving to cool, the reaction solution was added to a mixed solution of 1100 g of methanol and 100 g of 35%-by-weight hydrochloric acid, and the deposited precipitate was collected by filtration, washed with ion exchange water until the filtrate became neutral, and then dried. The obtained crude product was dissolved in 100 g of N,N-dimethylformamide, and added to a mixed solution of 1100 g of methanol and 100 g of 35%-by-weight hydrochloric acid, and the deposited precipitate was collected by filtration, washed with ion exchange water until the filtrate became neutral, washed with 1000 g of methanol, and then dried to obtain 25.7 g of precursors from which the segments having substantially no ion exchange group are derived, represented by the following formula (K).

GPC molecular weight: Mn=1700, MW=3100 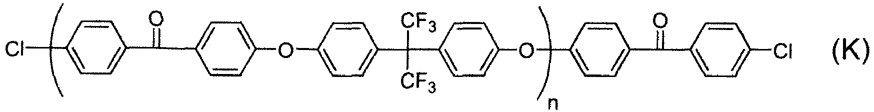 (wherein n represents the number of repeating units).

Next, 2.12 g (9.71 mmol) of anhydrous nickel bromide and 96 g of N-methylpyrrolidone were added to a flask under an argon atmosphere, and the resulting mixture was stirred at a bath temperature of 70°C. After confirming that the anhydrous nickel bromide was dissolved, the bath temperature was lowered to 50°C and 1.82 g (11.7 mmol) of 2,2'-bipyridyl was added thereto to prepare a nickel-containing solution.

4.02 g of the precursors from which the segments having substantially no ion exchange group are derived, represented by the above formula (K), and 384 g of N-methylpyrrolidone were added to a flask under an argon atmosphere, and the temperature was adjusted to 50°C. 3.81 g (58.2 mmol) of zinc powder, 1.05 g of a mixed solution of I part by weight of methanesulfonic acid and 9 parts by weight of N-methylpyrrolidone, and 24.0 g (45.9 mmol) of di(2,2-dimethylpropyl) 4,4'-dichlorobiphenyl-2,2'-disulfonate were added to the obtained solution, and the resulting mixture was stirred at 50°C for 30 minutes. The nickel-containing solution was poured thereinto, and a polymerization reaction was carried out at 50°C for 6 hours to obtain a black polymerization solution.

The obtained polymerization solution was poured into 3360 g of 13%-by-weight hydrochloric acid, and the mixture was stirred at room temperature for 30 minutes. The precipitate generated was collected by filtration, and then added to 3360 g of 13%-by-weight hydrochloric acid, stirred at room temperature for 30 minutes, and then filtered. The collected solid was washed with ion exchange water until the pH of the filtrate exceeded 4. To the obtained crude polymer were added 840 g of ion exchange water and 790 g of methanol, and the mixture was heated while stirring at a bath temperature of 90°C for 1 hour. The crude polymer was filtered and dried to obtain 24.3 g of a polymer (L) having sulfonic acid precursor groups ((2,2-dimethylpropyl) sulfonate groups).

Then, the sulfonic acid precursor groups were converted into sulfo groups as follows.

24.3 g of the polymer (L) having sulfonic acid precursor groups thus obtained above, 48.7 g of ion exchange water, 15.9 g (183 mmol) of anhydrous lithium bromide, and 487 g of N-methylpyrrolidone were put into a flask, and the mixture was heated while stirring at a bath temperature of 126°C for 12 hours to obtain a polymer solution. The obtained polymer solution was put into 3400 g of 13%-by-weight hydrochloric acid, and the mixture was stirred for 1 hour. The precipitated crude polymer was collected by filtration, and the residue was washed three times with 2430 g of a mixed solution of 10 parts by weight of methanol and 10 parts by weight of 35% hydrochloric acid. Thereafter, the crude polymer was washed with ion exchange water until the pH of the filtrate exceeded 4. Subsequently, to the obtained polymer was added a large amount of ion exchange water, the temperature was raised to 90°C or higher and maintained for about 10 minutes, and the mixture was filtered. This washing operation repeated four times. The obtained polymer was dried to obtain 17.0 g of a polymer (M) including the repeating units represented by the following formula: 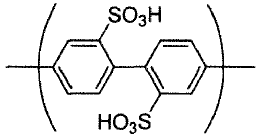 and the segments represented by the following formula: 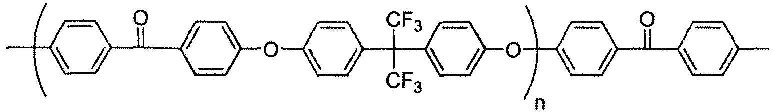 (wherein n represents the number of repeating units).

1.0 g of the obtained polymer (M) was dissolved in 19 g of dimethyl sulfoxide to prepare a polymer solution. The obtained polymer solution was cast-coated on a PET film, dried at 100°C under a normal pressure to remove the solvent, and then treated with 6%-by-weight hydrochloric acid and washed with ion exchange water to prepare a polymer electrolyte membrane having a membrane thickness of about 10 µm.
MW of segments having an ion exchange group (Condition 2): 71000
MW of precursors from which the segments having substantially no ion exchange group are derived: 3100
MW of copolymer: 819000
IEC (meq/g): 4.8
Proton conductivity (S/cm): 0.16
Concentration of aqueous solution including iron ions: 1.5 mmol/l
MW of segments having an ion exchange group after Fenton test (Condition 2): 60000
MW maintenance rate of segments having an ion exchange group in Fenton test: 85%

### <Example 5>

14.8 g (42.3 mmol) of 9,9'-bis(4-hydroxyphenyl)fluorene, 6.43 g (46.5 mmol) of potassium carbonate, 95 g of N,N-dimethylformamide, and 48 g of toluene were added to a flask equipped with an azeotropic distillation apparatus under a nitrogen atmosphere. The mixture was heated at a bath temperature of 155°C for 3 hours under the toluene reflux to azeotropically dehydrate moisture in the system. After water generated and toluene were distilled out, 17.0 g (59.2 mmol) of 4,4'-dichlorodiphenylsulfone was added thereto to obtain a mixture. The bath temperature was raised to 160°C and the mixture was stirred for 14 hours while maintaining the temperature. After leaving to cool, the reaction solution was added to a mixed solution of 1000 g of methanol and 200 g of 35%-by-weight hydrochloric acid, and the deposited precipitate was collected by filtration, washed with ion exchange water until the filtrate became neutral, and then dried. The obtained crude product was dissolved in 95 g of N,N-dimethylformamide, and added to a mixed solution of 1100 g of methanol and 100 g of 35%-by-weight hydrochloric acid, and the deposited precipitate was collected by filtration, washed with ion exchange water until the filtrate became neutral, washed with 1000 g of methanol, and then dried to obtain 25.4 g of precursors from which the segments having substantially no ion exchange group are derived, represented by the following formula (N).

GPC molecular weight: Mn=2000, MW=3500 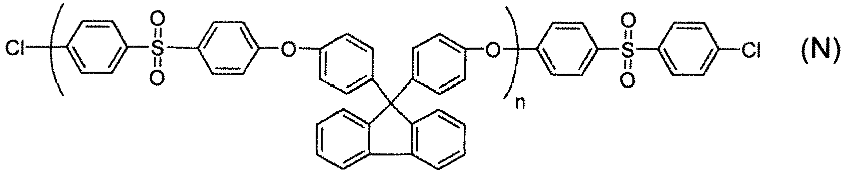 (wherein n represents the number of repeating units).

Next, 3.41 g (15.6 mmol) of anhydrous nickel bromide and 200 g of N-methylpyrrolidone were added to a flask under an argon atmosphere, and the resulting mixture was stirred at a bath temperature of 70°C. After confirming that the anhydrous nickel bromide was dissolved, the bath temperature was lowered to 50°C and 2.93 g (18.7 mmol) of 2,2'-bipyridyl was added thereto to prepare a nickel-containing solution.

3.35 g of the precursors from which the segments having substantially no ion exchange group are derived, represented by the formula (N), and 240 g of N-methylpyrrolidone were added to a flask under an argon atmosphere, and the temperature was adjusted to 50°C. 3.06 g (46.9 mmol) of zinc powder, 0.863 g of a mixed solution of 1 part by weight of methanesulfonic acid and 9 parts by weight of N-methylpyrrolidone, and 20.0 g (38.2 mmol) of di(2,2-dimethylpropyl) 4,4'-dichlorobiphenyl-2,2'-disulfonate were added to the obtained solution, and the resulting mixture was stirred at 50°C for 30 minutes. The nickel-containing solution was poured thereinto, and a polymerization reaction was carried out at 50°C for 5 hours to obtain a black polymerization solution.

The obtained polymerization solution was poured into 2800 g of 13%-by-weight hydrochloric acid, and the mixture was stirred at room temperature for 30 minutes. The precipitate generated was collected by filtration, and then added to 2800 g of 13%-by-weight hydrochloric acid, stirred at room temperature for 30 minutes, and then filtered. The collected solid was washed with ion exchange water until the pH of the filtrate exceeded 4. To the obtained crude polymer were added 600 g of ion exchange water and 700 g of methanol, and the mixture was heated while stirring at a bath temperature of 90°C for 1 hour. The crude polymer was filtered and dried to obtain 20.5 g of a polymer (O) having sulfonic acid precursor groups ((2,2-dimethylpropyl) sulfonate groups).

Then, the sulfonic acid precursor groups were converted into sulfo groups as follows.

19.7 g of the polymer (O) having sulfonic acid precursor groups thus obtained above, 44.2 g of ion exchange water, 13.3 g (153 mmol) of anhydrous lithium bromide, and 295 g of N-methylpyrrolidone were put into a flask, and the resulting mixture was heated while stirring at a bath temperature of 126°C for 12 hours to obtain a polymer solution. The obtained polymer solution was put into 2751 g of 13%-by-weight hydrochloric acid, and the mixture was stirred for 1 hour. The precipitated crude polymer was collected by filtration, and the residue was washed three times with 983 g of a mixed solution of 10 parts by weight of methanol and 10 parts by weight of 35% hydrochloric acid. Thereafter, the crude polymer was washed with ion exchange water until the pH of the filtrate exceeded 4. Subsequently, to the obtained polymer was added a large amount of ion exchange water, the temperature was raised to 90°C or higher and maintained for about 10 minutes, and the mixture was filtered. This washing operation repeated four times. The obtained polymer was dried to obtain 15.1 g of a polymer (P) including the repeating units represented by the following formula: 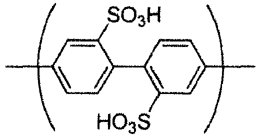 and the segments represented by the following formula: 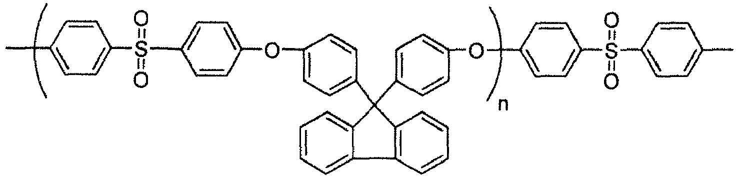 (wherein n represents the number of repeating units).

1.0 g of the obtained polymer (P) was dissolved in 16 g of N-methylpyrrolidone to prepare a polymer solution. The obtained polymer solution was cast-coated on a PET film, dried at 80°C under a normal pressure to remove the solvent, and then treated with 6%-by-weight hydrochloric acid and washed with ion exchange water to prepare a polymer electrolyte membrane having a membrane thickness of about 20 µm.
MW of segments having an ion exchange group (Condition 2): 75000
MW of precursors from which the segments having substantially no ion exchange group are derived: 3500
MW of copolymer: 683000
IEC (meq/g): 4.7
Proton conductivity (S/cm): 0.19
Concentration of aqueous solution including iron ions: 1.5 mmol/l
MW of segments having an ion exchange group after Fenton test (Condition 2): 68000
MW maintenance rate of segments having an ion exchange group in Fenton test: 90%

### <Comparative Example 1>

23.0 g (134 mmol) of 2,6-dichlorobenzonitrile, 42.0 g (125 mmol) of 2,2-bis(4-hydroxyphenyl) hexafluoropropane, 22.5 g (163 mmol) of potassium carbonate, 202 g of sulfolane, and 69 g of toluene were added to a flask equipped with an azeotropic distillation apparatus under an argon atmosphere. The mixture was heated at 140°C for 5 hours under the toluene reflux to azeotropically dehydrate moisture in the system. After generated water and toluene were distilled out, the temperature of the obtained mixture was raised to 200°C and the mixture was stirred for 5 hours while maintaining the temperature. After leaving to cool, 4.29 g (25.0 mmol) of 4,4'-dichlorobenzophenone was added thereto to obtain a mixture, and then the temperature of the mixture was raised to 200°C and the mixture was stirred for 5 hours while maintaining the temperature. After leaving to cool, the reaction solution was added to an excess amount of a mixed solution of 10 parts by weight of methanol and 10 parts by weight of 35% hydrochloric acid, and the deposited precipitate was collected by filtration, washed with ion exchange water until the filtrate became neutral, and then dried. 49 g of the obtained crude product was dissolved in 441 g of tetrahydrofuran, the insoluble materials were removed by filtration, and then the filtrate was added to an excess amount of methanol. The deposited precipitate was collected by filtration, washed with 6%-by-weight hydrochloric acid and ion exchange, and then dried to obtain 46.2 g of precursors from which the segments having substantially no ion exchange group are derived, represented by the following formula (Q).

GPC molecular weight: Mn=15200, MW=34300 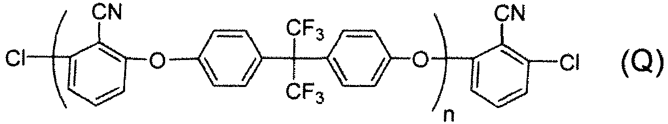 (wherein n represents the number of repeating units).

Next, 1.73 g (7.91 mmol) of anhydrous nickel bromide and 130 g of N-methylpyrrolidone were added to a flask under an argon atmosphere, and the resulting mixture was stirred at a bath temperature of 70°C. After confirming that the anhydrous nickel bromide was dissolved, the bath temperature was lowered to 50°C and 1.30 g (8.30 mmol) of 2,2'-bipyridyl was added thereto to prepare a nickel-containing solution.

1.67 g of the precursors from which the segments having substantially no ion exchange group are derived, represented by the above formula (Q), and 150 g of N-methylpyrrolidone were added to a flask under an argon atmosphere, and the temperature was adjusted to 50°C. 1.94 g (29.7 mmol) of zinc powder, 0.228 g of a mixed solution of 1 part by weight of methanesulfonic acid and 9 parts by weight of N-methylpyrrolidone, and 10.0 g (19.1 mmol) of di(2,2-dimethylpropyl) 4,4'-dichlorobiphenyl-2,2'-disulfonate were added to the obtained solution, and the resulting mixture was stirred at 50°C for 30 minutes. The nickel-containing solution was poured thereinto, and a polymerization reaction was carried out at 50°C for 6 hours to obtain a black polymerization solution.

The obtained polymerization solution was poured into 1400 g of 13%-by-weight hydrochloric acid, and the mixture was stirred at room temperature for 30 minutes. The precipitate generated was collected by filtration, and then added to 1400 g of 13%-by-weight hydrochloric acid, stirred at room temperature for 30 minutes, and then filtered. The collected solid was washed with ion exchange water until the pH of the filtrate exceeded 4. To the obtained crude polymer were added 350 g of ion exchange water and 330 g of methanol, and the mixture was heated while stirring at a bath temperature of 90°C for 1 hour. The crude polymer was filtered and dried to obtain 9.95 g of a polymer (R) having sulfonic acid precursor groups ((2,2-dimethylpropyl) sulfonate groups).

Then, the sulfonic acid precursor groups were converted into sulfo groups as follows.

9.95 g of the polymer (R) having sulfonic acid precursor groups thus obtained above, 22.4 g of ion exchange water, 6.64 g (76.4 mmol) of anhydrous lithium bromide, and 249 g of N-methylpyrrolidone were put into a flask, and the mixture was heated while stirring at a bath temperature of 126°C for 12 hours to obtain a polymer solution. The obtained polymer solution was put into 1390 g of 13%-by-weight hydrochloric acid, and the mixture was stirred for 1 hour. The precipitated crude polymer was collected by filtration, and the resultant was washed three times with 995 g of a mixed solution of 10 parts by weight of methanol and 10 parts by weight of 35% hydrochloric acid. Thereafter, the crude polymer was washed with ion exchange water until the pH of the filtrate exceeded 4. Subsequently, a large amount of ion exchange water was added to the obtained polymer, the temperature was raised to 90°C or higher and maintained for about 10 minutes, and the mixture was filtered. This washing operation repeated three times. The obtained polymer was dried to obtain 5.44 g of a polymer (S) including the repeating units represented by the following formula: 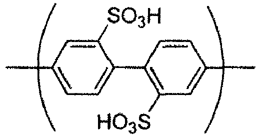 and the segments represented by the following formula: 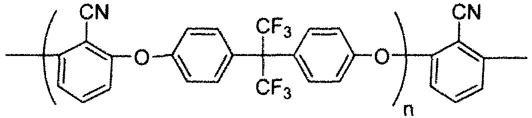 (wherein n represents the number of repeating units).

1.0 g of the obtained polymer (S) was dissolved in 24 g of dimethyl sulfoxide to prepare a polymer solution. The obtained polymer solution was cast-coated on a PET film, dried at 80°C under a normal pressure to remove the solvent, and then treated with 6%-by-weight hydrochloric acid and washed with ion exchange water to prepare a polymer electrolyte membrane having a membrane thickness of about 20 µm.
MW of segments having an ion exchange group (Condition 1): 282000
MW of precursors from which the segments having substantially no ion exchange group are derived: 34300
MW of copolymer: 930000
IEC (meq/g): 4.2
Proton conductivity (S/cm): 0.17
Concentration of aqueous solution including iron ions: 1.5 mmol/l
MW of segments having an ion exchange group after Fenton test (Condition 1): 146000
MW maintenance rate of segments having an ion exchange group in Fenton test: 52%

### <Comparative Example 2>

67.3 g (200 mmol) of 2,2-bis(4-hydroxyphenyl) hexafluoropropane, 60.3 g (240 mmol) of 4,4'-dichlorobenzophenone, 71.9 g (520 mmol) of potassium carbonate, 300 ml of N,N-dimethylformamide, and 150 ml of toluene were added to a flask equipped with an azeotropic distillation apparatus under an argon atmosphere, followed by stirring while distilling out water generated and toluene at 140°C for 8 hours, thereby obtaining a mixture. The bath temperature was raised to 158°C and the mixture was stirred for 10 hours while maintaining the temperature. After leaving to cool, 10.0 g (40 mmol) of 4,4'-dichlorobenzophenone was added thereto, and the bath temperature was raised to 158°C, followed by stirring while maintaining the temperature for 10 hours. After leaving to cool, 300 ml of N,N-dimethylformamide was added thereto, the insoluble materials were separated by filtration, and then the reaction solution was added to 4000 ml of methanol, and the deposited precipitate was collected by filtration. 300 ml of tetrahydrofuran was added to and dissolved in the obtained precipitate, and added to 4000 ml of methanol, and the deposited precipitate was collected by filtration and washed with ion exchange water, and then dried to obtain 109 g a polymer represented by the following formula (T).

GPC molecular weight: Mn=3900, MW=6600 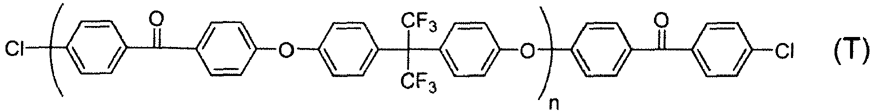 (wherein n represents the number of repeating units).

Next, 1.91 g (8.72 mmol) of anhydrous nickel bromide and 150 g of N-methylpyrrolidone were added to a flask under an argon atmosphere, and the resulting mixture was stirred at a bath temperature of 70°C. After confirming that the anhydrous nickel bromide was dissolved, the bath temperature was lowered to 50°C and 1.43 g (9.16 mmol) of 2,2'-bipyridyl was added thereto to prepare a nickel-containing solution.

6.77 g of the polymer represented by the above formula (T) described in Comparative Example 2, and 150 g of N-methylpyrrolidone were added to a flask under an argon atmosphere, and the temperature was adjusted to 50°C. 2.14 g (32.7 mmol) of zinc powder, 0.25 g of a mixed solution of 1 part by weight of methanesulfonic acid and 9 parts by weight of N-methylpyrrolidone, and 10.0 g (19.1 mmol) of di(2,2-dimethylpropyl) 4,4'-dichlorobiphenyl-2,2'-disulfonate were added to the obtained solution, and the resulting mixture was stirred at 50°C for 30 minutes. The nickel-containing solution was poured thereinto, and a polymerization reaction was carried out at 50°C for 5 hours to obtain a black polymerization solution.

The obtained polymerization solution was poured into 1400 g of 6 mol/l hydrochloric acid, and the mixture was stirred at room temperature for 30 minutes. The precipitate generated was collected by filtration, and then added to 1400 g of 6 mol/l hydrochloric acid, stirred at room temperature for 30 minutes, and then filtered. The collected solid was washed with ion exchange water until the pH of the filtrate exceeded 4. To the obtained crude polymer were added 350 g of ion exchange water and 330 g of methanol, and the mixture was heated while stirring at a bath temperature of 90°C for 1 hour. The crude polymer was filtered and dried to obtain 15.0 g of a polymer (U) having sulfonic acid precursor groups ((2,2-dimethylpropyl) sulfonate groups).

Then, the sulfonic acid precursor groups were converted into sulfo groups as follows.

15.0 g of the polymer (U) having sulfonic acid precursor groups thus obtained above, 16.9 g of ion exchange water, 6.64 g (76.4 mmol) of anhydrous lithium bromide, and 376 g of N-methylpyrrolidone were put into a flask, and the mixture was heated while stirring at a bath temperature of 126°C for 12 hours to obtain a polymer solution. The obtained polymer solution was put into 2103 g of 6 mol/l hydrochloric acid, and the mixture was stirred for 1 hour. The precipitated crude polymer was collected by filtration, and the resultant was washed three times with 1502 g of a mixed solution of 10 parts by weight of methanol and 10 parts by weight of 35% hydrochloric acid. Thereafter, the crude polymer was washed with ion exchange water until the pH of the filtrate exceeded 4. Subsequently, to the obtained polymer was added a large amount of ion exchange water, the temperature was raised to 90°C or higher and maintained for about 10 minutes, and the mixture was filtered. This washing operation repeated four times. The obtained polymer was dried to obtain 12.7 g of a polymer (V) including the repeating units represented by the following formula: 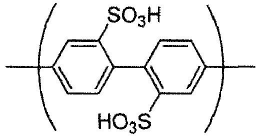 and the segments represented by the following formula: 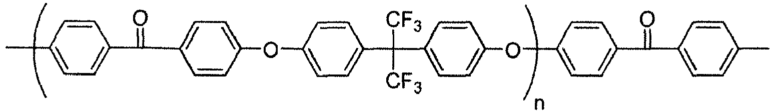 (wherein n represents the number of repeating units).

1.0 g of the obtained polymer (V) was dissolved in dimethyl sulfoxide to prepare a polymer solution. The obtained polymer solution was cast-coated on a PET film, dried at 80°C for 2 hours under a normal pressure to remove the solvent, and then treated with 6%-by-weight hydrochloric acid and washed with ion exchange water to prepare a polymer electrolyte membrane having a membrane thickness of about 20 µm.
MW of segments having an ion exchange group (Condition 2): 32000
MW of precursors from which the segments having substantially no ion exchange group are derived: 6600
MW of copolymer: 662000
IEC (meq/g): 2.9
Proton conductivity (S/cm): 0.12
Concentration of aqueous solution including iron ions: 1.5 mmol/l
MW of segments having an ion exchange group after Fenton test (Condition 2): 32000
MW maintenance rate of segments having an ion exchange group in Fenton test: 100%

The results of Examples 1 to 5 and Comparative Examples 1 and 2 are summarized in Table 1.

**[Table 1]**

| | Example | | | | | Comparative Example | |
|---|---|---|---|---|---|---|---|
| | 1 | 2 | 3 | 4 | 5 | 1 | 2 |
| IEC meq/g | 4.5 | 4.6 | 4.6 | 4.8 | 4.7 | 4.2 | 2.9 |
| Mw of copolymer | 400000 | 680000 | 765000 | 819000 | 683000 | 930000 | 662000 |
| Mw of segments having an ion exchange group | 113000 | 71000 | 213000 | 71000 | 75000 | 282000 | 32000 |
| Proton conductivity S/cm | 0.17 | 0.16 | 0.18 | 0.16 | 0.19 | 0.17 | 0.12 |
| Segments having an ion exchange group MW maintenance rate after Fenton test | 73% | 83% | 64% | 85% | 90% | 52% | 100% |

### INDUSTRIAL APPLICABILITY

The polyarylene-based polymer of the present invention exhibits high durability and practically useful proton conductivity when used as a polymer electrolyte-type member for a fuel cell, in particular, a polymer electrolyte membrane. The polyarylene-based polymer of the present invention is suitable as a catalyst layer of a polymer electrolyte-type fuel cell. Particularly, the polyarylene-based copolymer of the present invention is not easily susceptible to chemical deterioration or decomposition such as cleavage of molecular chains and not easily elutes the ion exchange groups that are responsible for proton conduction outside the system when used as a polymer electrolyte membrane in a fuel cell, and accordingly, a fuel cell exhibiting long-term stability and high efficiency in electricity generation can be obtained. Therefore, the polyarylene-based copolymer of the present invention is industrially highly useful, particularly in the applications of fuel cells.

## Claims

1. A polyarylene-based copolymer comprising:
a plurality of segments having an ion exchange group; and
a plurality of segments having substantially no ion exchange group,
wherein at least one of the segments having an ion exchange group includes a polyarylene structure, the polystyrene-equivalent weight-average molecular weight of the segments having an ion exchange group is from 10,000 to 250,000, and
the ion exchange capacity of the polyarylene-based copolymer is 3.0 meq/g or more.

2. The polyarylene-based copolymer according to claim 1, wherein at least one of the segments having substantially no ion exchange group has an electron withdrawing group, and has at least one selected from the group consisting of an ether bond and a thioether bond in the main chain.

3. The polyarylene-based copolymer according to claim 2, wherein the polystyrene-equivalent weight-average molecular weight as measured after the cleavage of the ether bond and the thioether bond included in the main chain of the segments having substantially no ion exchange group is from 10,000 to 250,000.

4. The polyarylene-based copolymer according to any one of claims I to 3, wherein 2200 parts by weight of dimethyl sulfoxide, 2 to 13 parts by weight of a methanol solution including 25% by weight of tetramethylammonium hydroxide, and I part by weight of the polyarylene-based copolymer are mixed to obtain a solution in which the mixed polyarylene-based copolymer is fully or substantially fully dissolved, and the polystyrene-equivalent weight-average molecular weight as measured after heating the solution at 100°C for 2 hours is from 10,000 to 250,000.

5. The polyarylene-based copolymer according to any one of claims I to 4, wherein the polystyrene-equivalent weight-average molecular weight of the segments having an ion exchange group is from 10,000 to 160,000.

6. The polyarylene-based copolymer according to any one of claims 2, 4, and 5, wherein the polystyrene-equivalent weight-average molecular weight as measured after the cleavage of the ether bond and the thioether bond included in the main chain of the segments having substantially no ion exchange group is from 10,000 to 160,000.

7. The polyarylene-based copolymer according to any one of claims 1 to 3, 5, and 6, wherein 2200 parts by weight of dimethyl sulfoxide, 2 to 13 parts by weight of a methanol solution including 25% by weight of tetramethylammonium hydroxide, and I part by weight of the polyarylene-based copolymer are mixed to obtain a solution in which the mixed polyarylene-based copolymer is fully or substantially fully dissolved, and the polystyrene-equivalent weight-average molecular weight as measured after heating the solution at 100°C for 2 hours is from 10,000 to 160,000.

8. The polyarylene-based copolymer according to any one of claims 1 to 7, wherein at least one of the segments having substantially no ion exchange group includes a structural unit represented by the following formula (1): 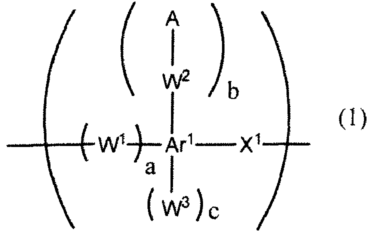 (wherein Ar¹ represents an arylene group which may have a substituent. The arylene group may have a group other than at least one group selected from the group represented by -(W²-A) and a group represented by W³ as a substituent. W¹ and W² each independently represent a divalent electron withdrawing group. W³ represents a monovalent electron withdrawing group. A represents a hydrogen atom, a fluorine atom, an alkyl group having 1 to 20 carbon atoms, which may have a substituent, an alkoxy group having I to 20 carbon atoms, which may have a substituent, an aryl group having 6 to 20 carbon atoms, which may have a substituent, or an aryloxy group having 6 to 20 carbon atoms, which may have a substituent. X¹ represents a group represented by -O- or a group represented by -S-. a represents an integer of 0 or 1, and b and c each independently represents an integer of 0 or more. a+b+c equals I or more. Further, when b is 2 or more, W²'s present may be the same as or different from each other, and A's present may be the same as or different from each other. When c is 2 or more, W³'s present may be the same as or different from each other).

9. The polyarylene-based copolymer according to claim 8, wherein the structural unit represented by the formula (1) is a structural unit represented by the following formula (2): 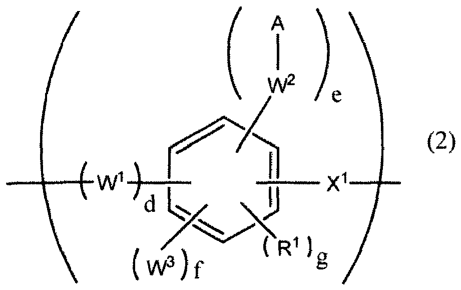 (wherein W¹, W², W³, X¹, and A have the same definitions as in the formula (1). R¹ represents an alkyl group having 1 to 20 carbon atoms, which may have a substituent, an alkoxy group having 1 to 20 carbon atoms, which may have a substituent, an aryl group having 6 to 20 carbon atoms, which may have a substituent, or an aryloxy group having 6 to 20 carbon atoms, which may have a substituent. Here, d represents an integer of 0 or 1, and e, f, and g each independently represents 0 to 4. d+e+f equals an integer of 1 to 5, and e+f+g equals an integer of 0 to 4. Further, when e is 2 or more, W²'s present may be the same as or different from each other and A's present may be the same as or different from each other. When f is 2 or more, W³'s present may be the same as or different from each other. When g is 2 or more, R¹'s present may be the same as or different from each other).

10. The polyarylene-based copolymer according to any one of claims I to 9, wherein the ion exchange capacity is from 3.5 meq/g to 5.5 meq/g.

11. The polyarylene-based copolymer according to any one of claims 1 to 10, wherein at least one of the segments having substantially no ion exchange group includes a structural unit represented by the following formula (3):
(̵Ar²-X²)̵ (3)
(wherein Ar² represents a divalent aromatic group, and the divalent aromatic group may have at least one group selected from a group consisting of a fluorine atom, an alkyl group having 1 to 20 carbon atoms, which may have a substituent, an alkoxy group having 1 to 20 carbon atoms, which may have a substituent, an aryl group having 6 to 20 carbon atoms, which may have a substituent, an aryloxy group having 6 to 20 carbon atoms, which may have a substituent, an acyl group having 2 to 20 carbon atoms, which may have a substituent, an arylsulfonyl group having 6 to 20 carbon atoms, which may have a substituent, an alkylsulfonyl group having 1 to 20 carbon atoms, which may have a substituent, and a cyano group as a substituent. X² represents a group represented by -O- or a group represented by -S-).

12. The polyarylene-based copolymer according to any one of claims 1 to 11, wherein at least one of the segments having an ion exchange group includes a structure represented by the following formula (4): 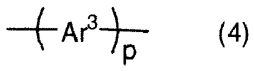 (wherein Ar³ represents a divalent aromatic group having an ion exchange group, and the divalent aromatic group may have at least one group selected from a group consisting of a fluorine atom, an alkyl group having 1 to 20 carbon atoms, which may have a substituent, an aryl group having 6 to 20 carbon atoms, which may have a substituent, an acyl group having 2 to 20 carbon atoms, which may have a substituent, an arylsulfonyl group having 6 to 20 carbon atoms, which may have a substituent, an alkylsulfonyl group having I to 20 carbon atoms, which may have a substituent, and a cyano group as a substituent. Here, p represents an integer of 1 or more. When p is 2 or more, Ar³'s present may be the same as or different from each other).

13. The polyarylene-based copolymer according to claim 12, wherein the aromatic ring consisting the main chain of the aromatic group represented by Ar³ has at least one ion exchange group which is directly bonded to the aromatic ring.

14. The polyarylene-based copolymer according to any one of claims 1 to 13, wherein the ion exchange group included in the segments having an ion exchange group is at least one acid group selected from a group consisting of a sulfo group, a phosphonic group, a carboxylic group, and a sulfonimide group.

15. The polyarylene-based copolymer according to any one of claims 12 to 14, wherein the said structure represented by the formula (4) is a structure represented by the following formula (5): 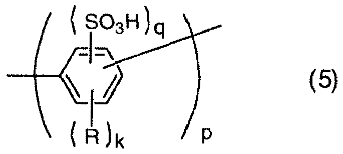 (wherein R represents a fluorine atom, an alkyl group having 1 to 20 carbon atoms, which may have a substituent, an aryl group having 6 to 20 carbon atoms, which may have a substituent, an acyl group having 2 to 20 carbon atoms, which may have a substituent, an arylsulfonyl group having 6 to 20 carbon atoms, which may have a substituent, an alkylsulfonyl group having I to 20 carbon atoms, which may have a substituent, or a cyano group. Here, k represents an integer of 0 to 3, q represents an integer of I or 2, and k+q equals an integer of 1 to 4. Further, when k is 2 or 3, R's present may be the same as or different from each other. p has the same definition as described above).

16. A polymer electrolyte comprising the polyarylene-based copolymer according to any one of claims 1 to 15.

17. A polymer electrolyte membrane comprising the polymer electrolyte according to claim 16.

18. A polymer electrolyte composite membrane comprising the polymer electrolyte according to claim 16 and a porous base material.

19. A catalyst composition comprising the polymer electrolyte according to claim 16 and a catalyst component.

20. A membrane electrode assembly comprising at least one selected from the polymer electrolyte membrane according to claim 17, the polymer electrolyte composite membrane according to claim 18, and the catalyst composition according to claim 19.

21. A polymer electrolyte-type fuel cell comprising the membrane electrode assembly according to claim 20.
